# EUROPEAN PATENT SPECIFICATION

(11) **EP 3 496 020 B1**
(45) Date of publication and mention of the grant of the patent: **08.10.2025**
(21) Application number: 17206233.3
(22) Date of filing: 08.12.2017
(51) Int. Cl.: G06Q 20/06, G06Q 20/02

(54) **METHOD FOR CARRYING OUT TRANSACTIONS**
VERFAHREN ZUR DURCHFÜHRUNG VON TRANSAKTIONEN
PROCÉDÉ PERMETTANT D'EFFECTUER DES TRANSACTIONS

(43) Date of publication of application: 12.06.2019
(73) Proprietor: CoreLedger AG, 9494 Schaan (LI)
(72) Inventor: SCHWEIFER, Johannes, 6340 Baar (CH); FJODOROVICS, Jevgenijs, 8808 Pfäffikon SZ (CH); LATZER, Stefan, 8630 Rüti (CH); ZBINDEN, Richard, 6300 Zug (CH)
(74) Representative: Stolmár & Partner Patentanwälte PartG mbB

(56) References cited:
- US-A1- 2016 292 672
- JOSEPH POON ET AL: "The Bitcoin Lightning Network: Scalable Off-Chain Instant Payments", 14 January 2016 (2016-01-14), XP055358006, Retrieved from the Internet <URL:https://lightning.network/lightning-network-paper.pdf> [retrieved on 20170323]
- MATTHEW GREEN ET AL: "Bolt: Anonymous Payment Channels for Decentralized Currencies", INTERNATIONAL ASSOCIATION FOR CRYPTOLOGIC RESEARCH,, vol. 20160824:221807, 25 August 2016 (2016-08-25), pages 1 - 32, XP061021638

## Description

The present invention relates to a method for carrying out transactions in a network implementing a distributed ledger. In particular, some embodiments of the invention allow several transaction supplies to be combined in an advantageous way, allowing a plurality of transaction nodes to perform a combined transaction in a simple and effective manner.

### Background of the invention

Distributed ledgers are ledgers relying on consensus of replicated and shared digital data, spread across multiple nodes in a network. Distributed ledgers allow carrying out transactions among the nodes by consensus among the nodes themselves. In particular some or all of the nodes are capable of reaching consensus about the true state of the ledger, or a relevant part thereof, without the help of a dedicated privileged third party. This consensus is stored as a decentralized ledger such that each node can access it at any time.

One known form of distributed ledger is the blockchain system. A blockchain implementing network includes transaction nodes and ledger computing node, or blockchain computing nodes, also known as miners. The blocks are computed by the blockchain computing nodes and store the distributed ledger which includes the transactions carried out among the nodes. The computing of a block is designed to be a computationally intensive activity. In exchange for the computational effort required, the ledger computing nodes are awarded compensation in form of an electronic currency. Known examples of blockchain based distributed ledgers can be, for instance, Bitcoin or Ethereum. However, not all forms of distributed ledgers implement blockchains. Other implementations, for instance, can be based for instance on directed acyclic graphs, such as implemented by IOTA or Hashgraph.

In general, any network implementing a distributed ledger comprises transaction nodes and ledger computing nodes. The ledger computing nodes receive transaction requests, or transaction supplies, by the transaction nodes and record them in the ledger by carrying out some sort of mathematically intensive computation. The transaction nodes can access the ledger at any time and independently check the validity of the ledger with a rather simple computation, compared to the one required for the creation of the ledger.

Networks implementing a distributed ledger can consume large computational resources and vast amounts of energy. Any improvement which allows a more effective use of those resources is therefore desirable.

US2016/292672A1 discloses an approach to carry out transaction on a blockchain.

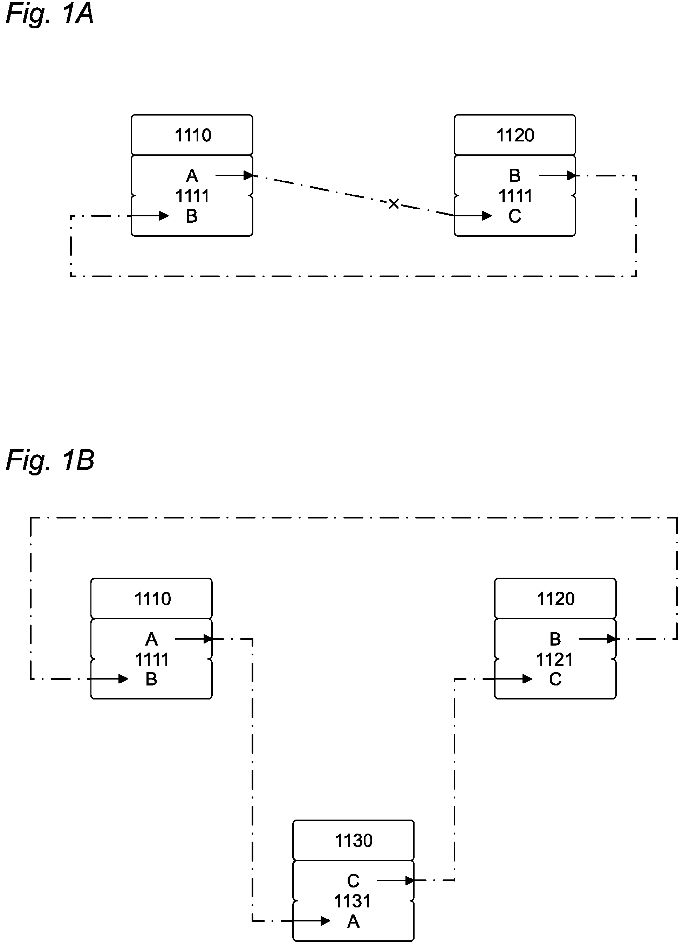

Figure 1A schematically illustrates a common situation in which two transaction nodes 1110 and 1120 intend to carry out a transaction in a network implementing a distributed ledger. For clarity of illustration only the two transaction nodes 1110, 1120 are illustrated, it will however be clear that other transaction nodes and ledger computing nodes will be part of the network.

As illustrated in figure 1A, transaction node 1110 intends to sell asset A and obtain in exchange asset B. Said otherwise, transaction node 1110 intends to buy asset B and offers in exchange asset A. The indication of which assets are offered and requested is contained in a transaction supply 1111. That is, transaction node 1110 can be seen as a seller or as a buyer and, in the following, the two terms will both be used, depending on the context. It will however be clear that in any commercial exchange, any node is generally a buyer and a seller, at the same time. Similarly, transaction node 1120 intends to sell asset B and buy in exchange asset C, as indicated by the transaction supply 1111.

Transaction nodes 1110, 1120 can generally be intended as any sort of electronic equipment with the capability of interacting in a network implementing a distributed ledger, said otherwise, with the capability of connecting to other electronic equipment through a network and send and receive messages. As an example of a transaction node 1110, 1120, a PC or a smartphone could be used. As an example of a network allowing the various nodes to communicate with each other, the Internet could be used. The transaction supply 1111, 1121 can generally be interpreted as any electronically storable information, such as a file or a data stream, which indicates, eventually by an appropriate decoding of the information, at least an asset be sold and an asset to be acquired.

In the example in figure 1A, transaction nodes 1110 and 1120 would not be able to conclude a transaction, since transaction node 1120 offers asset B, as requested by transaction node 1110, however the request of asset C by transaction node 1120 doesn't match the offer of asset A by transaction node 1110, as schematically illustrated by the broken line.

Figure 1B illustrates a possible solution to the problem illustrated in figure 1A. In particular, as can be seen in figure 1B, transaction node 1130 is now further present in the network with a transaction supply 1131, according to which node 1130 offers asset C in exchange for obtaining asset A. As can be easily understood from figure 1B, in this configuration, the transaction between transaction nodes 1110 and 1120 can be carried out thanks to the presence of transaction node 1130.

A transaction such as illustrated in figure 1B can be implemented by allowing each node 1110-1130 to exchange the intended assets with the other nodes. This will be referred to as a multinode transaction. That is, if transaction nodes 1110-1130 determine that their three transaction supplies can be successfully brought together, node 1110 could for example start the process by transferring asset A to node 1130, thereby obtaining asset C in return. Thereafter, node 1110 could transfer asset C to node 1120, thereby obtaining asset B in return.

Such method for carrying out a multinode transaction, however, presents several drawbacks.

Firstly, any transaction requires trust between the transaction nodes involved, particularly so when executed electronically. Even in a transaction involving just two transaction nodes 1110, 1120, an electronic execution of the transaction very often does not allow for the real-time exchange of the assets. Thus, assuming that transaction node 1120 has a transaction supply offering asset B and requesting asset A, transaction node 1110 can start the transaction by transferring asset A to transaction node 1120 but it then has to trust that transaction node 1120 will transfer asset B in return.

Even further, once such electronic transaction is carried out, it very often only constitutes a contract between the transaction nodes. This is particularly the case when the assets are not electronically transferrable. For instance, when asset A is wood and asset B is silver, both physically stored at some locations in physical form, any transaction involving those assets will likely require a physical movement of those assets, which cannot be carried out in real time. That means that transaction node 1110 and transaction node 1120 need to trust that, following the successful electronic transaction, each transaction node will fulfill his part of the contract and physically transfer the asset to the new owner.

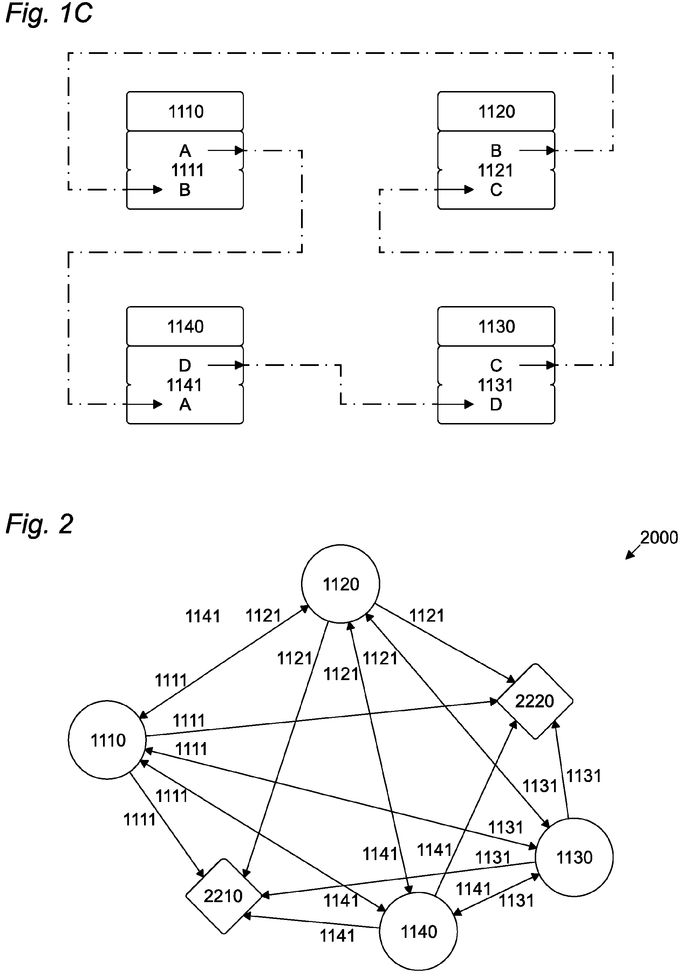

In a transaction such as the one illustrated in figure 1B, by increasing the number of transaction nodes taking part in the multinode transaction, it becomes increasingly complicated for all the transaction nodes to mutually trust each other. As an example, even if transaction node 1110 and transaction node 1120 would trust each other completely, the positive outcome of their transaction would now rely on the reliability of transaction node 1130. This clearly becomes more complicated as additional transaction nodes are added to the multinode transaction, such as illustrated in figure 1C.

In the example illustrated in figure 1C, although it is in principle possible for transaction nodes 1110 and 1120 complete their intended transactions by being enabled and, at the same time, enabling the transactions of transaction nodes 1130 and 1140, such multinode transaction requires trust of each transaction node in all other transaction nodes, which is difficult to achieve in the real world and even more complicated in an electronic platform.

This issue effectively renders a multinode transaction in an electronic network to be very difficult to be accepted by the transaction nodes. This difficulty further increases with the number of transaction nodes involved.

Moreover, the transactions illustrated in figures 1B and 1C must be carried out sequentially, one transaction at the time.

With respect to the example illustrated in figure 1B, it can be assumed, for example, that transaction node 1120 starts the multinode transaction by transferring asset B to transaction node 1110 and receiving in exchange asset A. Transaction node 1120 is not interested in asset A but knows, thanks to the transaction supply 1131, that transaction node 1130 is interested in asset A and will exchange it with asset C, which is what transaction node 1120 intends to acquire.

Therefore, to complete the transaction, transaction node 1120 has to become, even if only temporarily, owner of asset A. This may not always be allowed depending on the legislation where transaction node 1120 operates. This may also not be permitted depending on who controls asset A, which may not allow transaction node 1120 to own it. Such limitations could prevent the otherwise successful execution of the multinode transaction, even though node 1120 actually has no interest or desire in owning asset A.

In a distributed ledger system, each transaction which is recorded in the ledger requires the ledger computing nodes to consume computational resources. As computational resources are limited, it is generally preferable to contain the number of transactions as much as possible.

In the example of figure 1C, assuming node 1110 starts the multinode transaction, when using a sequential approach, the following transactions would have to be recorded in the ledger:
1. transaction node 1110 transfers asset A to transaction node 1140
2. transaction node 1140 transfers asset D to transaction node 1110
3. transaction node 1110 transfers asset D to transaction node 1130
4. transaction node 1130 transfers asset C to transaction node 1110
5. transaction node 1110 transfers asset C to transaction node 1120
6. transaction node 1120 transfers asset B to transaction node 1110
for a total of six transactions necessary for completing the multinode transaction. It would therefore be desirable to provide a method which reduces the number of transactions and thus reduces the computational resources required for running the system.

Furthermore, the use of computation resources by the ledger computing node is usually paid by the transaction node requesting the transaction. In Ethereum, for instance, the transaction node requiring the transaction has to pay the ledger computing node with an electronic currency, known as gas. In the example above, transaction node 1110 requests recording in the ledger of three transactions out of six, while transaction nodes 1120-1140 only request one transaction each to be recorded. Thus transaction node 1110 has a higher cost to be paid compared to transaction nodes 1120-1140, which may prevent transaction node 1110 from starting the multinode transaction. A method which divides the transaction costs equally among all nodes would thus be preferable.

Additionally, in a multinode transaction such as the example of figure 1C, there is a risk of rupture in the chain of transaction. That is, referring to the exemplary chain described above, after node 1110 has carried out the first two transactions and is holding asset C, which node 1110 originally intended to exchange with node 1120, node 1120 may have found a better transaction supply, or simply accepted a quicker transaction in which asset C is exchanged for asset B. That is, by the time node 1110 has carried out transactions 1 and 3, it may find that transaction supply 1121 is not valid anymore and thereby remain in possession of asset C, which node 1110 never intended to possess.

This risk increases when the number of transactions increases, effectively rendering multinode transactions such as the ones illustrated in figure 1C very difficult to be accepted by the transaction nodes, and more so as the number of transaction nodes increases.

One solution to this issue could consist in rendering the transactions faster, so that transaction node 1110 has a higher certainty that, by the time transactions 1-4 are completed, transaction supply 1121 will still be valid. The number of transactions operated per unit time, however, is a parameter which is not necessarily controllable by transaction node 1110. Moreover, the increase of the number of transactions per time generally requires the ledger computing nodes to increase their computing capabilities, which increases the costs and the energy consumption of the distributed ledger.

One further issue with the current approach to a multinode transaction such as the one illustrated in figure 1C can be understood from figure 2.

Figure 2 schematically illustrates the communications exchanged in a network 2000 implementing a distributed ledger, according to the state of the art. As an example, the network 2000 comprises four transaction nodes 1110-1140 and two ledger computing nodes 2210-2220. As can be seen, the exchange of the transaction supply 1111-1141 creates a situation in which all transaction nodes 1110-1140 and all ledger computing nodes 2210-2220 are aware of all possible transaction supplies 1111-1141.

At this point, each transaction node might evaluate all possible transaction supplies 1111-1141 and recognize potential multinode transactions, such as those schematically illustrated in figure 1C. In a situation with only four transaction nodes 1110-1140 and four transaction supplies 1111-1141 this may still be possible. However, as the number of transaction nodes and transaction supplies increases, to potentially millions or billions thereof, the computation resources needed at each single transaction node in order to recognize possible multinode transactions increases significantly. This is highly inefficient as it further requires each transaction node to identify such multinode transactions independently, thus multiplying the computational resources needed.

The above mentioned problems thus prevent multinode transactions to be carried out in networks implementing distributed ledgers.

It is therefore an object of the invention to provide a method for carrying out transactions in a network implementing a distributed ledger, which overcomes or reduces at least one of the above described drawbacks.

### Summary of the invention

The invention generally relies on the concept that a multinode transaction identifier can be added to the network and be operated to identify possible multinode transactions. This advantageously eliminates the need for using computational resources at each node, since only the multinode transaction identifier is evaluating the transaction supplies and computing the possible multinode transactions among them. This also advantageously makes it possible for the multinode transaction identifier to reuse the results of previous determinations for a number of multinode transactions.

Moreover, in some embodiments, the multinode transaction identifier can compute a multinode transaction which combines two or more transaction supplies, preferably three or more transaction supplies, into a single multinode transaction. This reduces the number of transactions which need to be recorded into the distributed ledger to a single one, independently on how many nodes and transactions are involved in the multinode transaction. By doing so, computational resources, particularly those of the ledger computing nodes, are more efficiently used.

Further, in some embodiments, since only a single multinode transaction is recorded into the distributed ledger, the disadvantages associated with a plurality of subsequent transactions, as described above, are also overcome.

An embodiment of the invention may in particular relate to a method for carrying out transactions in a network implementing a distributed ledger, wherein the network comprises a plurality of transaction nodes a plurality of ledger computing nodes and one multinode transaction identifier, the method comprising the steps of: issuing of transaction supplies, by the transaction nodes, identifying and combining at least two transaction supplies into a multinode transaction, by the multinode transaction identifier.

In some embodiments, the method can further comprise, before the identifying step a step of: requesting the multinode transaction, by at least one transaction node.

In some embodiments, the method can further comprise a step of transmitting the multinode transaction to the transaction node requesting the multinode transaction.

In some embodiments, the identifying step can comprise the steps of: selecting a first transaction supply, recursively selecting and matching one or more transaction supplies, and wherein the combining step comprises combining the first transaction supply and the one or more recursively matching transaction supplies.

In some embodiments, the combining step can comprise the step of: settling the at least two transaction supplies.

In some embodiments, the method can further comprise the step of: committing of a committed multinode transaction in the distributed ledger, by a transaction node which received the multinode transaction.

In some embodiments, the committed multinode transaction can be recorded in the distributed ledger as a single transaction.

In some embodiments, the multinode transaction can be recorded in the distributed ledger by using a buffer when transferring assets among the transaction nodes.

A further embodiment of the invention may relate to a multinode transaction identifier for combining transactions from a network implementing a distributed ledger, wherein the network comprises a plurality of transaction nodes capable of issuing transaction supplies and a plurality of ledger computing nodes, the multinode transaction identifier comprising: an identifying and combining unit for identifying and combining at least two transaction supplies into a multinode transaction, and a communication unit for transmitting the multinode transaction to a transaction node.

### Brief description of the figures

Figures 1A-1C schematically illustrate a method for carrying out transactions in a network according to the state of the art,
Figure 2 schematically illustrates transaction supply messages exchanged in a network implementing a distributed ledger according to the state of the art,
Figure 3 schematically illustrates a network 3000 for carrying out transactions according to an embodiment of the invention,
Figure 4 schematically illustrates a method 4000 for carrying out transactions according to an embodiment of the invention,

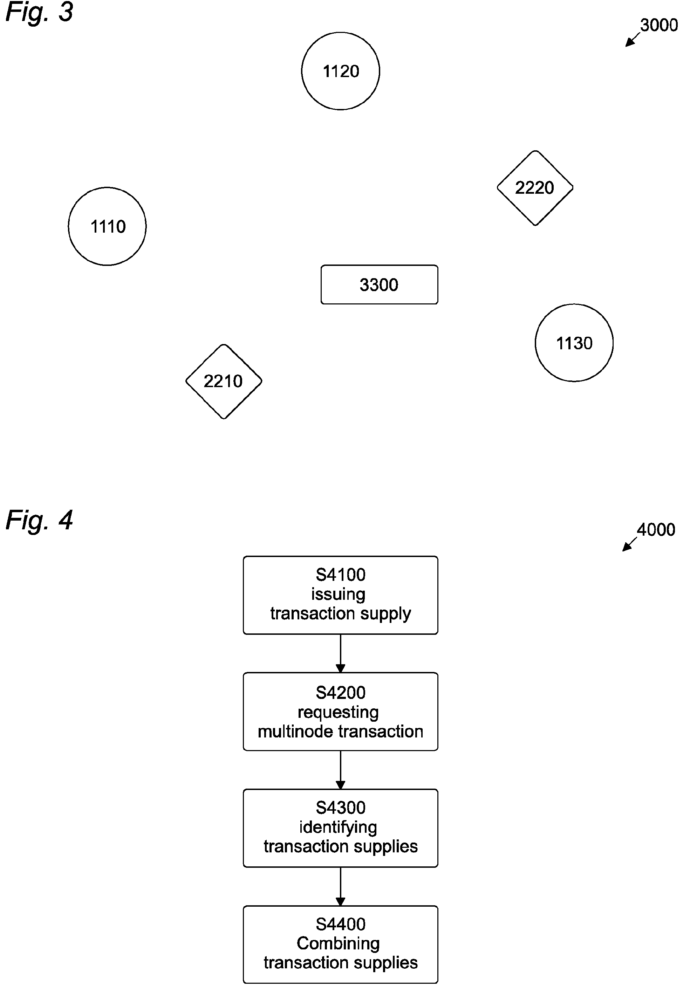

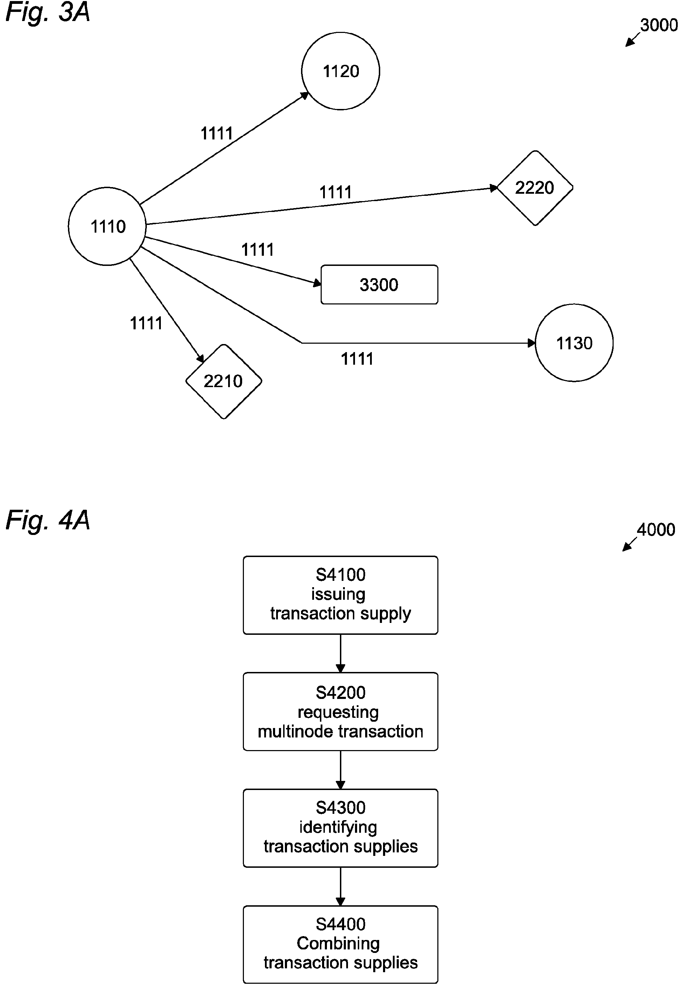

Figures 3A-3E schematically illustrate several communications being exchanged in the network 3000 at different time points,
Figures 4A-4E schematically illustrate which steps of the method 4000 are being carried out at the various time points of Figures 3A-3E, respectively,

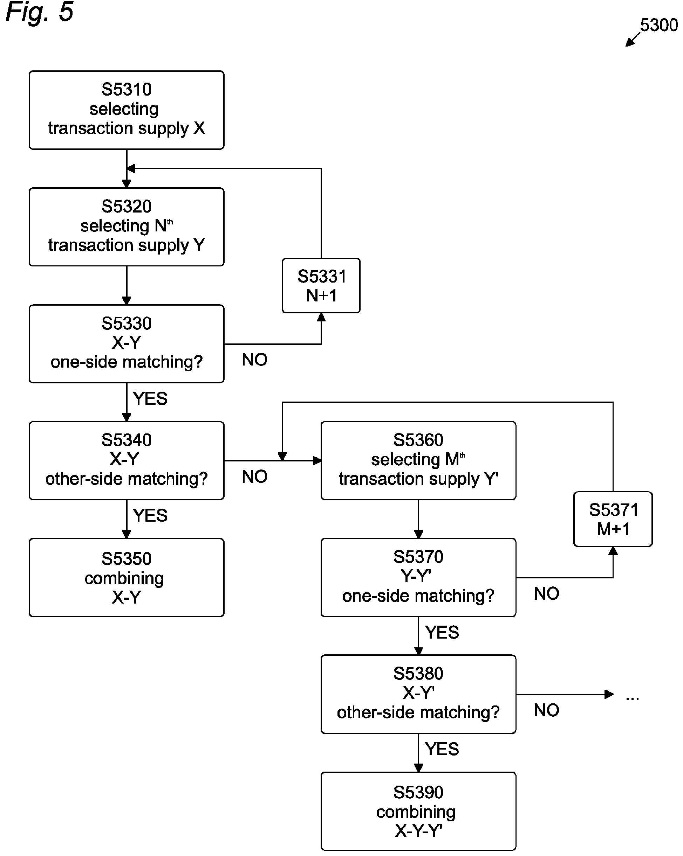

Figure 5 schematically illustrates a transaction supplies identifying and combining step 5300 according to an embodiment of the invention,

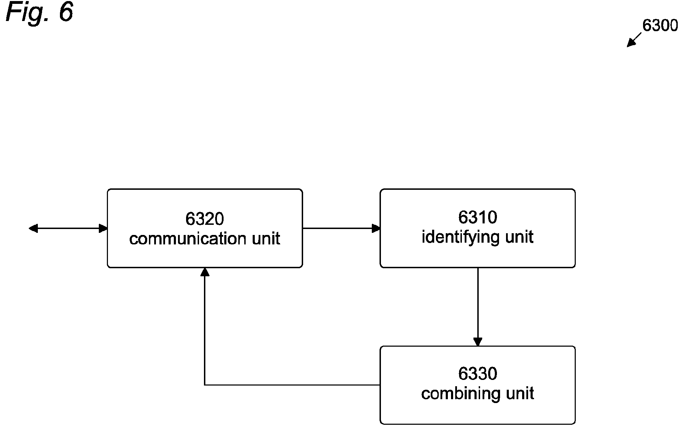

Figure 6 schematically illustrates a multinode transaction identifier 6300 according to an embodiment of the invention.

### Detailed description of preferred embodiments

In the following, several embodiments of the invention will be described. It will be clear to those skilled in the art that the embodiments are provided for understanding of the scope of protection of the present application, which is however not limited by the specific embodiments but defined by the claims.

It will further be clear that the invention can be applied to any kind of distributed ledger technology. In some passages, for clarity of understanding, references will be made to an implementation involving a blockchain based distributed ledger technology, in some other passages a specific available platform known as Ethereum will be provided as an example of such blockchain based distributed ledger technology. It will however be clear that those passages are provided for better understanding of the invention through specific examples and/or for describing particular advantages of the invention when carried out in the context of those specific embodiments. The invention is however not limited to such specific embodiments.

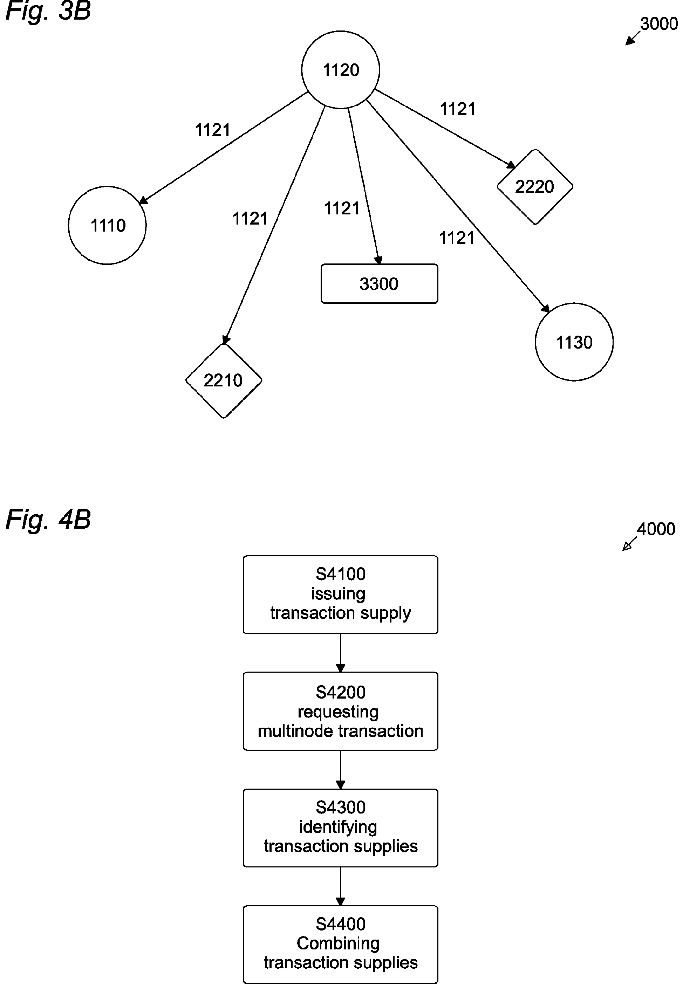

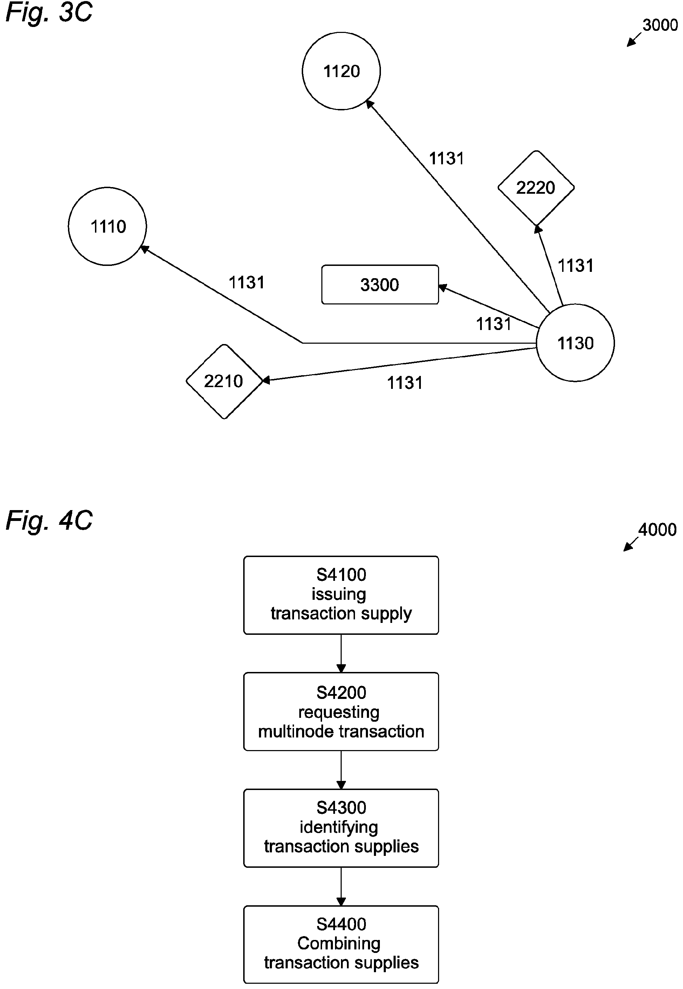

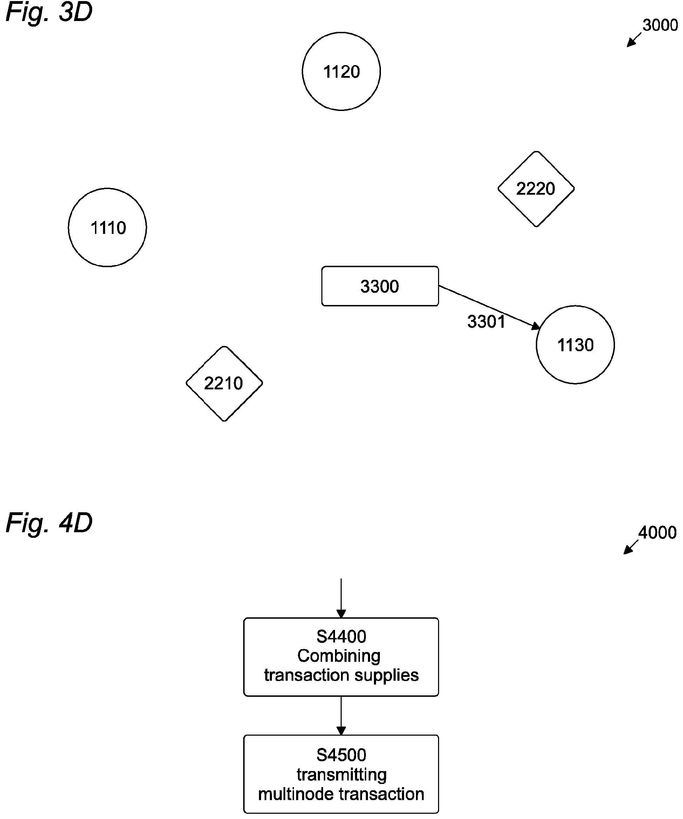

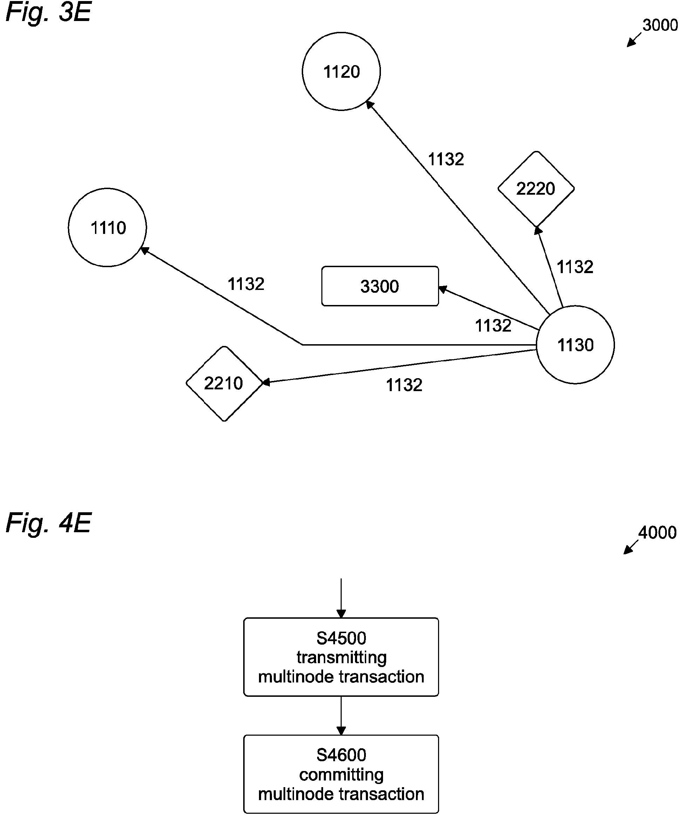

Figure 3 schematically illustrates a network 3000 for carrying out transactions according to an embodiment of the invention. It will be clear that only the nodes are illustrated, without the interconnections among them, for clarity of illustration. The network 3000 differs from network 2000 due to the presence of the multinode transaction identifier 3300. Generally, the multinode transaction identifier 3300 can be seen as a node of the network 3000 which can communicate with at least one other node in the network 3000 and thereby identify possible multinode transactions, based on the transaction supply 1111-1141. In some further embodiments, the multinode transaction identifier 3300 can further combine the transaction supplies into a multinode transaction 3301 and transmit the multinode transaction 3301 to one or more nodes.

In particular, in some embodiments, the multinode transaction identifier 3300 can receive the transaction supplies 1111-1141 directly from the transaction nodes 1110-1140, as will be described in the examples below. Alternatively, or in addition, in some embodiments, the multinode transaction identifier 3300 can retrieve the transaction supplies 1111-1141 from the distributed ledger, for instance by retrieving it from one or more of the ledger computing nodes 2210-2220. One advantage of the former approach is that the multinode transaction identifier 3300 is informed quickly of the transaction supplies 1111-1141. One advantage of the latter approach is that the transaction supplies 1111-1141 which are evaluated by the multinode transaction identifier 3300 are already recorded in the ledger.

The multinode transaction identifier 3300 can be implemented by any electronic equipment capable of receiving electronic data, such as files, elaborating the received data, and transmitting the elaborated data. As an exemplary implementation, the multinode transaction identifier 3300 can be implemented by a general purpose computer, or a PC.

Figure 6 schematically illustrates a multinode transaction identifier 6300 which represents a possible specific implementation of the multinode transaction identifier 3300, according to an embodiment of the invention. In particular, the multinode transaction identifier 6300 is configured for combining transaction supplies 1111-1141 from a network 3000, wherein the network 3000 comprises a plurality of transaction nodes 1110-1140 capable of issuing transaction supplies 1111-1141 and a plurality of ledger computing nodes 2210-2220. More specifically, the multinode transaction identifier 6300 comprises an identifying unit 3610, for identifying transaction supplies which can be combined to form a multinode transaction, a combining unit 6330 for combining at least two transaction supplies 1111-1141, preferably three or more transaction supplies 1111-1141, into a multinode transaction 3301, and a communication unit 6320 for transmitting the multinode transaction 3301 and, in general, communicating with the plurality of transaction nodes 1110-1140 and/or with the plurality of ledger computing nodes 2210-2220.

More specifically, the communication unit 6320 can be any electronic equipment capable of communicating with the protocol specified by the network 3000. For instance if the network 3000 is the internet, the communication unit 6320 could be a modem or similar. The identifying unit 6310 and the combining unit 6330 could each independently be a CPU, with the necessary memory for the respective operation, which are preferably capable of performing the method 4000 which will be described below, or which are capable of running a method formally defined by at least parts of the code attached in annex 1 below.

Thanks to the presence of the multinode transaction identifier 3300, the transactions can be performed with an improved ease for the nodes, and with reduced computational resources for the transaction nodes 1110-1140 as well as for the ledger computing nodes 2210-2220. In general, the multinode transaction identifier 3300 allows a centralized identification of multinode transactions 3301, relieving each node from performing identification operation. Moreover by only having to record a combined multinode transaction instead of a plurality of transactions, the network reduces the amount of operations needed. In this manner the network 3000 can implement more functionalities than the network 2000 with a comparable number of computational resources.

Figure 4 schematically illustrates a method 4000 for carrying out transactions according to an embodiment of the invention. In particular, the method 4000 allows advantageously identifying a multinode transaction 3301 based on a plurality of transaction supplies 1111-1141 in the network 3000 and more specifically comprises a step S4100 of issuing of transaction supplies 1111-1141 by the transaction nodes 1110-1140. In this step any of the transaction nodes 1110-1140 can issue any number of transaction supplies 1111-1141. The issuing of transaction supplies 1111-1141 can be performed in any manner which allows the transaction nodes 1110-1140 to inform the network 3000 of the newly available transaction supply, for instance by broadcasting the newly available transaction supply to the network 3000, such as illustrated in figures 3A-3C. Alternatively, or in addition, in other embodiments the transaction nodes 1110-1140 could only transmit the information on the newly available transaction supply to the ledger computing nodes 2210-2220. In general, any implementation of the issuing step S4100 can be implemented which allows the transaction nodes 1110-1140 to inform the ledger computing nodes 2210-2220 that the transaction supplies 1111-1141 have been issued and should therefore be recorded in the distributed ledger. In one embodiment of the invention, at least parts of the issuing step S4100 can be implemented by the function "CreateSupply" described in the code in Annex 1. In particular, the function "CreateSupply" can be used to implement the supply creation parts of step S4100 while further functions may be used for transmitting the created supply to the network and recording it into the distributed ledger.

The transaction supply 1111-1141 can be expressed in any manner allowing storing of the transaction supply in the distributed ledger. In a specific embodiment related to a blockchain based smart contract system, such as for instance Ethereum, the transaction supply 1111-1141 can be implemented as a file or a data stream comprising a request from a transaction node 1110-1140 for running one function of the smart contract for creating a new transaction supply, with inputs defining the assets comprised in the transaction supply 1111-1141. The actual running of the smart contract function is carried out by the ledger computing nodes 2210-2220, also known as miners in Ethereum, resulting in the modification of the variables of the smart contract itself, thus effectively recording the transaction supply into the smart contract, that is, recording the transaction supply into the distributed ledger.

As an example in figures 3A-3C, three issuing steps S4100 for transaction nodes 1110-1140 resulting in the issuing of transaction supplies 1111-1141 to the network 3000 are illustrated. As can be seen, in the illustrated examples, all nodes in the network 3000 are reached by the transaction supplies 1111-1141, this is however not necessarily always the case. In particular, it is sufficient that the transaction supplies 1111-1141 reach at least one ledger computing node 2210-2220, thereby allowing the transaction supplies 1111-1141 to be recorded in the distributed ledger. Once the transaction supplies 1111-1141 are recorded in the distributed ledger they are available to all users of the network 3000. Any node of the network, including the multinode transaction identifier 3300 may at any time have access to the distributed ledger and recover in this manner the transaction supplies 1111-1141.

In the prior art network 2000, after the issuing steps S4100, the situation illustrated in figure 2 would arise. Namely, each transaction node 1110-1140 would have to independently compute several possible multinode transactions to evaluate the possibility to conclude a multinode transaction such as the one illustrated in figure 1C. To the contrary, in the invention, thanks to the presence of multinode transaction identifier 3300, the use of computing resources of the network 3000 can be significantly improved.

In particular, the method 4000 further comprises a step S4300 of identifying at least one transaction supply 1111-1141, preferably two and more preferably three or more transaction supplies 1111-1141, and a step S4400 of combining them into a multinode transaction 3301, by the multinode transaction identifier 3300, 6300. It will be clear that, although figure 4 illustrates the identifying and combining steps as being subsequent to the issuing step S4100, for ease of illustration and since formally at least one issued transaction supply 1111-1141 is needed for the identifying and combining steps to operate, the present invention is not limited thereto. In fact, in some embodiments, the identifying and combining steps can run in parallel to the issuing steps S4100, by periodically evaluating newly issued transaction supplies 1111-1141 for identifying new possible multinode transactions 3301, as will be described below.

With reference to the multinode transaction identifier 6300, step S4300 could be carried out by the identifying unit 6310, while step S4400 could be carried out by the combining unit 6330.

Moreover, in some embodiments, the identifying and combining steps could be requested by one transaction node 1110-1140, looking for a specific multinode transaction, with an optional multinode transaction requesting step S4200. For instance, with reference to the example in figure 1C, once transaction supplies 1111-1141 have been issued, transaction node 1140, which is looking for a transaction supply involving assets D and A may interrogate the multinode transaction identifier 3300 and request the identification of a multinode transaction fulfilling its requirements. In this case, the multinode transaction identifier 3300 would then receive as input for the identification step the assets required by transaction node 1140 and perform the steps S4300 and S4400 so as to identify and combine a multinode transaction 3301 fitting those requirements.

Requesting step S4200 is an optional step and the method 4000 could also be implemented by letting the multinode transaction identifier 3300 autonomously identify possible multinode transactions 3301 and informing the transactions nodes belonging to the respective multinode transactions, thus implementing a more proactive role. This implementation has the additional advantage that several transactions nodes belonging to a single multinode transaction 3301 could be informed at the same time of the existence of possible multinode transaction, instead of waiting for an explicit request from one of them.

In the identifying step S4300 the multinode transaction identifier 3300, 6300, generally evaluates at least some of the transaction supplies 1111-1141, preferably all of them, and evaluates whether the possibility of performing a multinode transaction such as the one schematically illustrated in figure 1C is available. That is, the multinode transaction identifier 3300, 6300 scans the currently valid transaction supplies 1111-1141 and identifies multinode transactions among them. If the multinode transaction had been requested by a specific transaction node, in step S4200, the identifying and combining step S4300 uses the requirements expressed by the transaction node as input. Otherwise the identifying step S4300 can periodically identify possible multinode transactions and proactively inform the respective transaction nodes.

It will be clear to the skilled person that several alternative implementations are possible for the identifying step S4300. Generally, the identifying step S4300 identifies transaction supplies which can result in a multinode transaction, as exemplified in figures 1B and 1C. Using a graphical analogy, the combining step S4300 receives as an input a plurality of transaction supplies 1111-1141, which can be thought of vectors in space, each having an incoming port corresponding to the requested asset and an outgoing port corresponding to the offered asset. A number of algorithms can be identified by those skilled in the art, which will allow those transaction supplies to be combined, namely which allows the various points to be connected to each other in such a way that the input port of one point matches the output port or another point. This can be interpreted as a graph problem, or a geometry problem, for which several known alternative solutions can be implemented and it is not the purpose of the invention to detail all such possible implementations.

In the following an example will be described of how transaction supplies 1111-1141 can be analyzed to identify possible multinode transactions, so as to implement the identifying step S4300. Afterwards, examples will be described of how those transaction supplies 1111-1141 can be combined into a multinode transaction 3301 so as to implement the combining step S4400.

For the purpose of providing a detailed description of one possible embodiment, a specific possible implementation the identifying and combining steps will be described with reference to figure 5. It will be clear that this is only one possible embodiment and that the invention is not limited to the specifically illustrated implementation. In general, any way of identifying multinode transactions and combining them can be implemented by the identifying and combining steps.

In the embodiment illustrated in figure 5, the identifying and combining step S5300 comprises a step of selecting S5310 a first transaction supply X among the plurality of available supplies, and steps S5320-S5340, S5360-S5380, for recursively selecting and matching one or more transaction supplies Y, Y'. In some embodiments, the initial transaction supply X may be a transaction supply issued to the network 3000 and recorded in the distributed ledger, in particular in those embodiments where the multinode transaction identifier proactively searches for possible multinode transactions. Alternatively, or in addition, in some embodiments the initial transaction supply X may only be a proposed transaction supply, requested by the transaction node in step S4200, but not yet recorded into the distributed ledger.

In general terms, step S5310 can be interpreted as starting from any one of the transaction supplies 1111-1141, or the requested transaction at step S4200, and recursively evaluating the remaining transaction supplies 1111-1141, while avoiding double evaluation of any transaction supply when moving into the recursive levels, so as to find matching transaction supplies which allow a multinode transaction to be closed, such as the exemplary one illustrated in figure 1C. More formally, the exemplary embodiment illustrated in figure 5 only explicitly illustrates the first two recursive levels, for ease of representation, and it will be clear to the skilled person how the algorithm can be implemented to any recursive depth wished.

More specifically, in a step S5320, a transaction supply B, different from transaction supply X, is selected among the currently valid transaction supplies 1111-1141. In a step S5330, a one side-matching is performed between transaction supply X and transaction supply Y. By one-side matching it is meant that, depending on the implementation, either the selling asset of transaction supply X and the buying asset of transaction supply Y are checked for a match, or vice versa. If a match is not found between X and Y, operation proceeds to step S5331, in which the next transaction supply Y is selected, provided any are left, for one-side matching with transaction supply X. If a one-side match is found between X and Y, step S5340 is carried out, in which an other-side matching is performed. Here the other-side matching indicates the complementary check to the one-side match, depending therefore on the selected implementation of the one-side matching step S5330. Assuming for instance that in the one-side matching S5330 the selling asset of transaction supply X and the buying asset of transaction supply Y are checked for a match, in the other-side matching step S5340 the buying asset of transaction supply X and the selling asset of transaction supply Y are checked for a match. If a match is found, then transaction supplies X and Y respectively match both their selling and buying assets and can therefore be combined in step S5350, which thus results into a multinode transaction 3301 based on the two transaction supplies X and Y.

If, on the other hand, the other-side matching step S5340 is not successful, the method recursively goes one level deeper into the recursion path by selecting in step S5360 a transaction supply Y', different from X and Y, and recursively repeating steps S5330 and S5340 in the form of steps S5370 and S5380. In particular, in step S5360 the one-side matching check is performed again, except that this time the check is carried out between transaction supply Y and transaction supply Y'. If a match is not found, transaction supply Y' is replaced with the next available supply, provided any are left, different from transaction supply X and Y, in a step S5371, which is similar to step S5331. If a one-side match is found, the operation proceeds to the other-side matching step S5380 which operates similarly to step S5340, except that the other side matching is carried out among transaction supply X and transaction supply Y' instead of transaction supply Y. If a match is found, the multinode transaction 3301 is combined based on transaction supplies X, Y and Y'. Otherwise the method can proceed to a further deeper recursive level in a manner which will be clear to those skilled in the art.

Thanks to this exemplary implementation it can be ensured that possibly existing multinode transactions are identified.

The various supplies can then be combined, in the combining step S4400, into one or more multinode transaction 3301 in several manners. In one embodiment, the multinode transaction 3301 can be a collection of the single transaction supplies 1111-1141 on which the multinode transaction 3301 is based. For instance, with reference to the example of figure 1C, the multinode transaction 3301 could be the collection of one or more of the following transaction supplies:
1. transaction node 1110 transfers asset A to transaction node 1140
2. transaction node 1140 transfers asset D to transaction node 1110
3. transaction node 1110 transfers asset D to transaction node 1130
4. transaction node 1130 transfers asset C to transaction node 1110
5. transaction node 1110 transfers asset C to transaction node 1120
6. transaction node 1120 transfers asset B to transaction node 1110

Alternatively, or in addition, the multinode transaction 3301 can comprise pointers allowing the single transaction supplies on which the multinode transaction 3301 is based to be identified, such as unique references to the single transactions supplies, for instance supplies pointers, numbers or hashes.

Still alternatively, or in addition, the combining step S4400 can comprise a step of settling the first transaction supply X and the one or more recursively matching transaction supplies Y, Y' thus obtaining a settled multinode transaction 3301. By settled multinode transaction 3301 it is meant a single transaction in which the plurality of transaction supplies on which the multinode transaction 3301 is based on are first settled and then combined. This can be more clearly explained with reference to the example described above with reference to figure 1C. As described above, the multinode transaction of figure 1C can be, for instance, implemented by six independent transactions
1. transaction node 1110 transfers asset A to transaction node 1140
2. transaction node 1140 transfers asset D to transaction node 1110
3. transaction node 1110 transfers asset D to transaction node 1130
4. transaction node 1130 transfers asset C to transaction node 1110
5. transaction node 1110 transfers asset C to transaction node 1120
6. transaction node 1120 transfers asset B to transaction node 1110

Those transactions can be combined in a single settled multinode transaction 3301 by a settling step. With reference to the example above,
1. asset A is transferred from transaction node 1110 to transaction node 1140
2. asset D is transferred from transaction node 1140 to transaction node 1110 and then to transaction node 1130
3. asset C is transferred from transaction node 1130 to transaction node 1110 and then to transaction node 1120
4. asset B is transferred from transaction node 1120 to transaction node 1110
thus resulting in the following settled transactions:
1. transaction node 1110 transfers asset A to transaction node 1140
2. transaction node 1140 transfers asset D to transaction node 1130
3. transaction node 1130 transfers asset C to transaction node 1120
4. transaction node 1120 transfers asset B to transaction node 1110
all of which can be recorded in the distributed ledger as a single settled multinode transaction 3301. As can be seen, thanks to the settling step, it is possible to advantageously reduce the number of operations to be carried out in the settled multinode transaction 3301 to four, compared to the six operations carried out in the multinode transaction 3301. This more effectively reduce the computational power needed for recording the transaction into the distributed ledger, thus making a more efficient use of the computational resources of the system. Moreover, this approach advantageously reduces the issues related to whitelisting, since each transaction node only performs a transaction related to assets which the transaction node intended to operate with from the start, such as for instance transaction node 1110 receiving asset B and transferring asset A, while avoiding assets C and D which, on the other hand, were temporarily transferred to transaction node 1110 in the sequential implementation according to the state of the art.

Alternatively, or in addition, the multinode transaction can be recorded by the network 3000 by using a buffer when transferring the assets. That is, instead of transferring the assets from one transaction node to another, the assets can be transferred from a transaction node to a buffer and then from the buffer to another transaction node. In this manner also regulatory issues which may arise, due to the potential need of one transaction node to have to identify the transaction nodes with which it carries out a transaction are avoided. Namely, since the transactions are carried out between the transaction node and a buffer only, the transaction node does not have any transaction with any specific transaction node.

With reference to the example above,
1. asset A is transferred from transaction node 1110 to transaction node 1140
2. asset D is transferred from transaction node 1140 to the buffer and then to transaction node 1130
3. asset C is transferred from transaction node 1130 to the buffer and then to transaction node 1120
4. asset B is transferred from transaction node 1120 to transaction node 1110
thus resulting in the same settled transactions above, but now being settled entirely between two nodes:
1. transaction node 1110 transfers asset A to transaction node 1140
2. transaction node 1140 transfers asset D to transaction node 1130
3. transaction node 1130 transfers asset C to transaction node 1120
4. transaction node 1120 transfers asset B to transaction node 1110

In all of the above cases, by allowing the distributed ledger to only record a single multinode transaction 3301, the resources of the network 3000 are used more efficiently than in the prior art, in which several transactions would have to be recorded.

The method 4000 further comprises a step S4500 of transmitting the multinode transaction 3301, by the multinode transaction identifier 3300, 6300. In some embodiments, the transmitting step S4500 comprises the steps of transmitting the multinode transaction 3301 to the transaction node 1110-1140 which requested the multinode transaction in step S4200. In alternative embodiments, the multinode transaction 3301 can be sent to all nodes involved in the multinode transactions, thus allowing each node to further record the multinode transaction in the distributed ledger.

As will be evident from the description above, the multinode transaction identifier 3300 is not instructing the ledger computing nodes 2210-2220 to record the multinode transaction 3301 in the distributed ledger. To the contrary, the multinode transaction identifier 3300, after having created the multinode transaction 3301, only transmits the multinode transaction 3301 to one or more transaction nodes. This is advantageous since the decision to record the multinode transaction into the distributed ledger is left to the transaction nodes, thereby avoiding any unintended operation due to the presence of the multinode transaction identifier 3300.

After the transmitting step S4500, the one or more of the transaction nodes 1110-1140 receiving the multinode transaction 3301 can instruct the ledger computing nodes 2210-2220 to record the multinode transaction 3301 in the distributed ledger by issuing of a committed multinode transaction 1132, in a committing step S4600, thus effectively carrying out the multinode transaction 3301. In some embodiments, at least parts of the committing step S4600 can be implemented by the function "RunWarp" described in Annex 1.

In this manner the transaction node 1110-1140 performing the committing step S4500 informs at least the ledger computing nodes 2210, 2220 of the multinode transaction 3301, which is then recorded as a single transaction at the ledger computing nodes 2210-2220.

This has several advantages. Firstly, since only one multinode transaction 3301 is registered in the distributed ledger, instead of several sequential transactions, the computational resources, both in terms of computing power for carrying out the transactions and in terms of memory for storing the distributed ledger, are reduced. This advantageously also allows more transactions to be carried out per unit of time without increasing the computational resources of the network 3000.

Moreover, since the multinode transaction 3301 is committed and therefore recorded in the distributed ledger as a single transaction, that is, in a single step, the recording of the multinode transaction 3301 can only be successful or unsuccessful in its entirety. That is, the possibility of completing some of the transactions comprised in the multinode transaction 3301, but not the entire multinode transaction 3301, is ruled out. This is particularly advantageous as it avoids the possibility of the transaction chain comprised in the multinode transaction 3301 to be broken.

Additionally, in the invention, the supplies which are combined into the multinode transaction 3301 can each comprise two assets. This advantageously allows the settlement operation described above, which reduces the number of transactions which need to be carried out and recorded in the distributed ledger.

Thanks to this approach it is therefore possible to implement a distributed ledger network in which at least three different types of nodes exist, namely the transaction nodes 1110-1140, the ledger computing nodes 2210-2220 and the multinode transaction identifier 3300. Those nodes have different characteristics. Namely, the ledger computing nodes 2210-2220 are in charge of computing and possibly recording the distributed ledger. The transaction nodes 1110-1140 carry out transactions which are recorded in the distributed ledger. The multinode transaction identifier 3300 may not, per se, carry out any transaction and thereby instruct any change on the distributed ledger. Further, the multinode transaction identifier 3300 may also not be in charge of computing the distributed ledger. On the other hand, the multinode transaction identifier 3300 acts as a catalyst in allowing several transaction supplies 1111-1141 issued by the transaction nodes 1110-1140 to be effectively combined, allowing an efficient and effective operation of the network, enabling multinode transactions which would otherwise not be possible while at the same time reducing the use of computational resources by the transaction nodes 1110-1140 and/or by the ledger computing nodes 2210-2220.

In an embodiment of the invention, the assets which form part of the transaction supplies 1111-1141 can be defined to comprise a hash identifier. In a specific embodiment of the invention, the assets can be defined as the "ASSET" structure in the code of Annex 1 comprising the hash in form of a 32 bytes data structure. The hash can be interpreted as the fingerprint of data at an external storing location (e.g. in a database, external to the distributed ledger), that is, for instance, a string which allows recognition of the data at the external storing location, which contains the detail characteristics of the asset. This is advantageous since the hashes can be used as a proof that the data in the external database has not changed, in particular by selecting a mathematical operation for the creation of the hash which results in a different hash if the underlying data is changed. The plurality of details can further have any size which will be defined by the external database while not impacting the definition of the asset. That is, for instance, for the asset "wood", a plurality of details could be provided such as the geographical origin, the storage location, and several industrial characteristics of the wood. For the asset "silver", a plurality of details to be provided for such as the storage location, the purity, the physical size of the ingots, etc.

The advantage of this approach consists in the fact that only the hash contained in the asset, and not the plurality of details to which the hash refers, has to be maintained by the network 3000. In particular only the hash contained in the asset has to be recorded in the distributed ledger. Thanks to this approach, the combination of resources of the network 3000 are more effectively used since recording of the hash in the asset is computationally much more effective than recording of the asset details with their arbitrary lengths. Moreover, since several assets are likely to have a different amount of details for characterizing them, the use of the hash referencing to information stored on an external database allows more flexibility on the types and sizes of details which are associated to each asset without changing the formal definition of the asset within the distributed ledger.

Moreover, the description of the asset details available on the external database can be accessed and copied, in some embodiments, at any time by any user of the network 3000. This also advantageously allows propagation of those details by copying, which effectively results in decentralized storage of the data and thereby increases the reliability of the dataset, since an attacker would have to change all available copies of the dataset to change the description associated with one or more assets. Even in doing so, the resulting hash would still not match the hash in the ledger.

Since the hash is recorded in the distributed ledger and because there is no technical path provided to change the hash once after it has been committed to the ledger, the definition of the asset itself is immutable. In some cases however there may be a need to modify the details associated to that hash as the details of the asset may have changed. An example thereof would be a change of the storage location of Silver. The invention allows this change, but not by allowing a modification of the original hash but instead by means of an amendment function and amendment records in the ledger, such as the "AMENDMENT" described in Annex 1. In particular, the invention allows a hash to refer to an amended description on the external database, thus allowing the amendments to be recorded and tracked in the same distributed and reliable way as described for the asset itself.

In an embodiment of the invention, the assets which form part of the transaction supplies 1111-1141 can be defined to comprise an issuer identifier. In a specific embodiment of the invention, the assets can be defined as the "ASSET" structure in the code of Annex 1 comprising the issuer identifier in form of an address of a node in the network 3000.

Generally speaking, the presence of the issuer identifier allows the asset to be guaranteed, or traced back, to a specific issuer. Moreover, this allows only the specific issuer, namely the holder of the key associated to the issuer address, to create of destroy the number of tokens of the available asset, to eventually modify the asset's description, etc. This is particularly advantageous in the method of the invention since, for instance, in the requesting multinode transaction step S4200 and/or in the supplies identifying and combining step S4300, assets can be specified to be selected which have been created by a specific issuer. For instance, asset "gold" can exist in different forms, associated to different issuers, such as different gold operators. The issuer identifier can then be used as a filter in selecting those transaction supplies which are evaluated when identifying and combining the multinode transaction 3301. This results in less supplies being evaluated, thus allowing a more efficient operation of the multinode transaction identifier 3300.

Moreover, the issuer identifier ensures that the multinode transaction identifier 3300 can avoid any responsibility in the selection of a specific transaction supply when creating the multinode transaction 3301. In other words, assuming that a similar asset, but from two different issuers, would be available in the transaction supplies published on the network 3000, the multinode transaction identifier 3300 would have a responsibility in selecting which asset to be combined in the multinode transaction 3301. This may involve assuming responsibility of the choice since one asset from a first issuer may be preferable to an identical asset from a second issuer. For instance the first issuer could provide a better liquidity, a more established operation, etc. By associating the issuer to the specific asset, this problem is solved since the specific asset indicated in the transaction supply contained in the multinode transaction will necessarily have to be from a specific issuer, thereby shifting the responsibility of the choice to the node issuing the transaction supply and not to the multinode transaction identifier 3300.

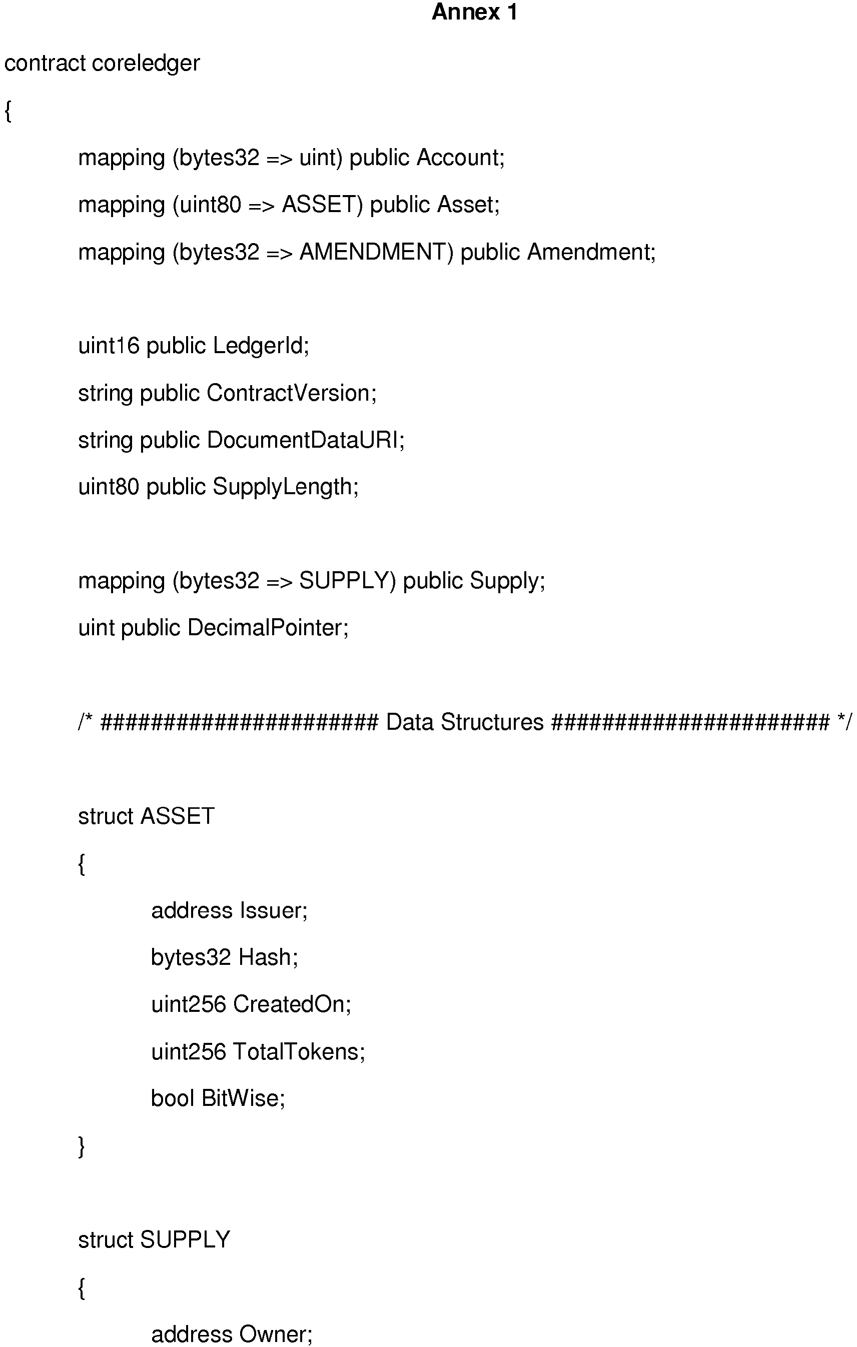

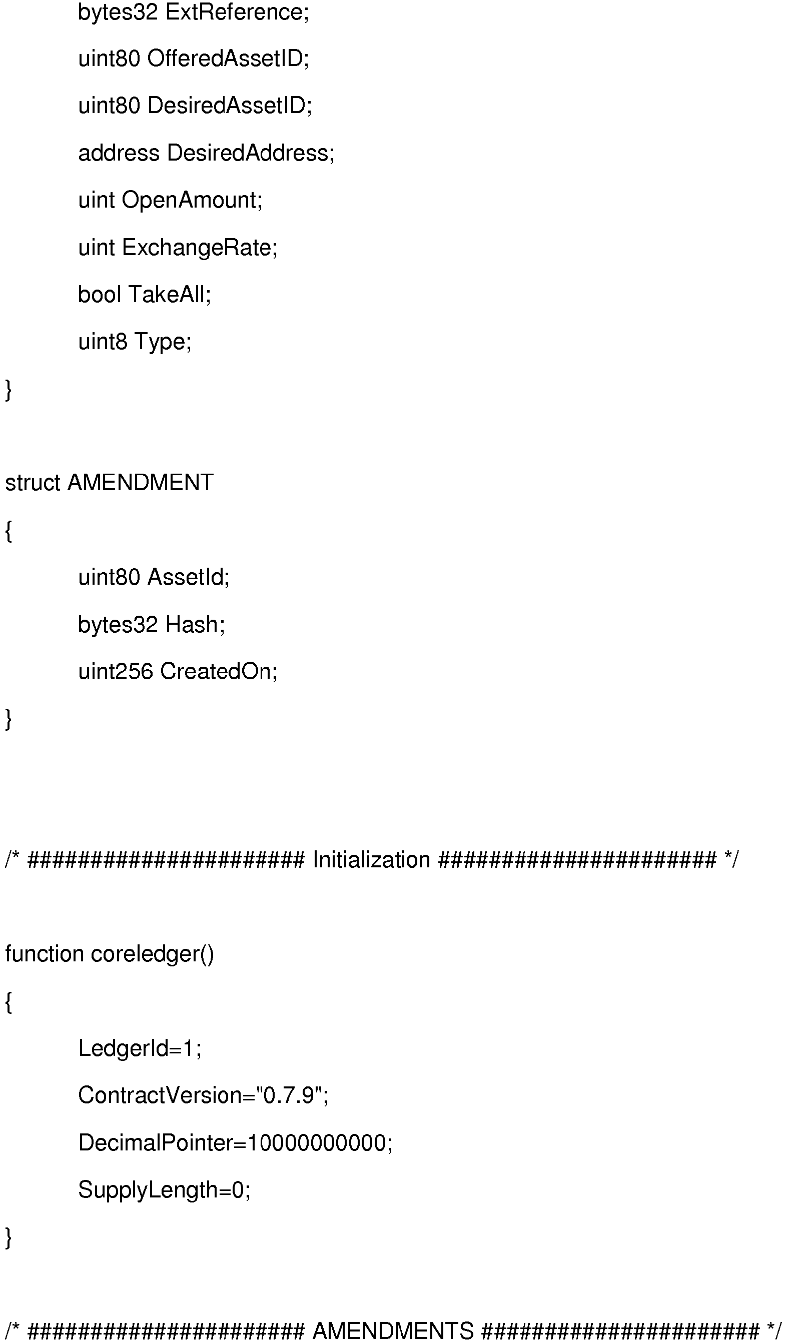

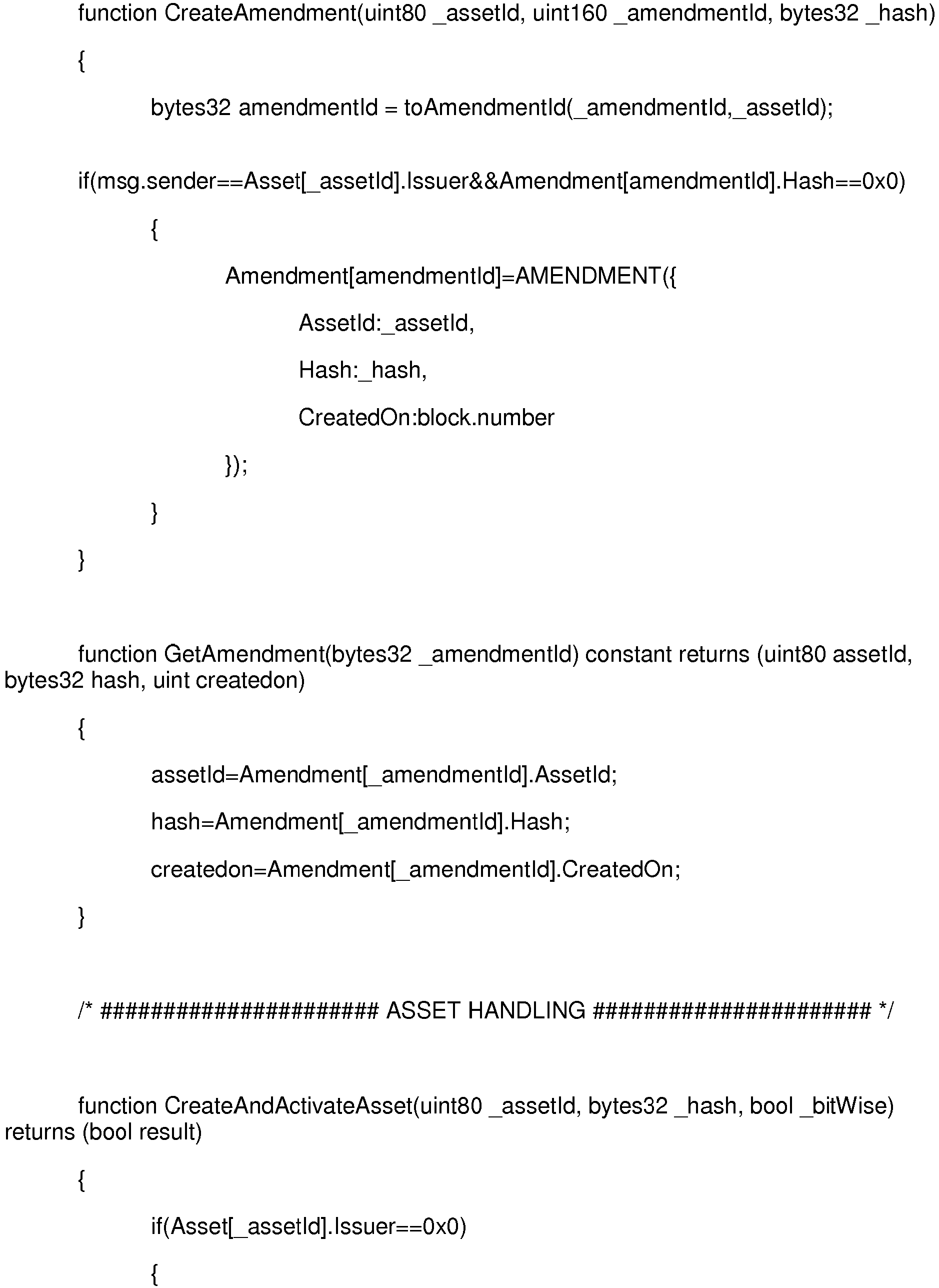

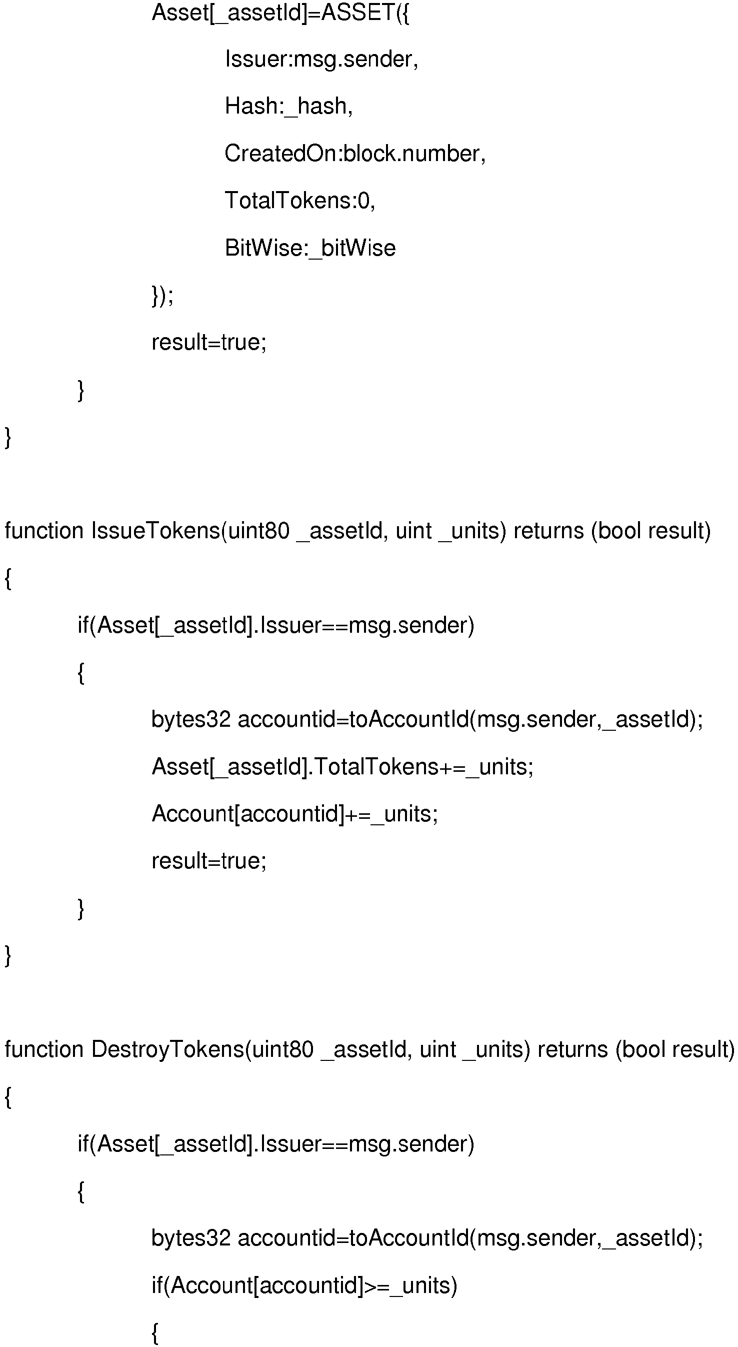

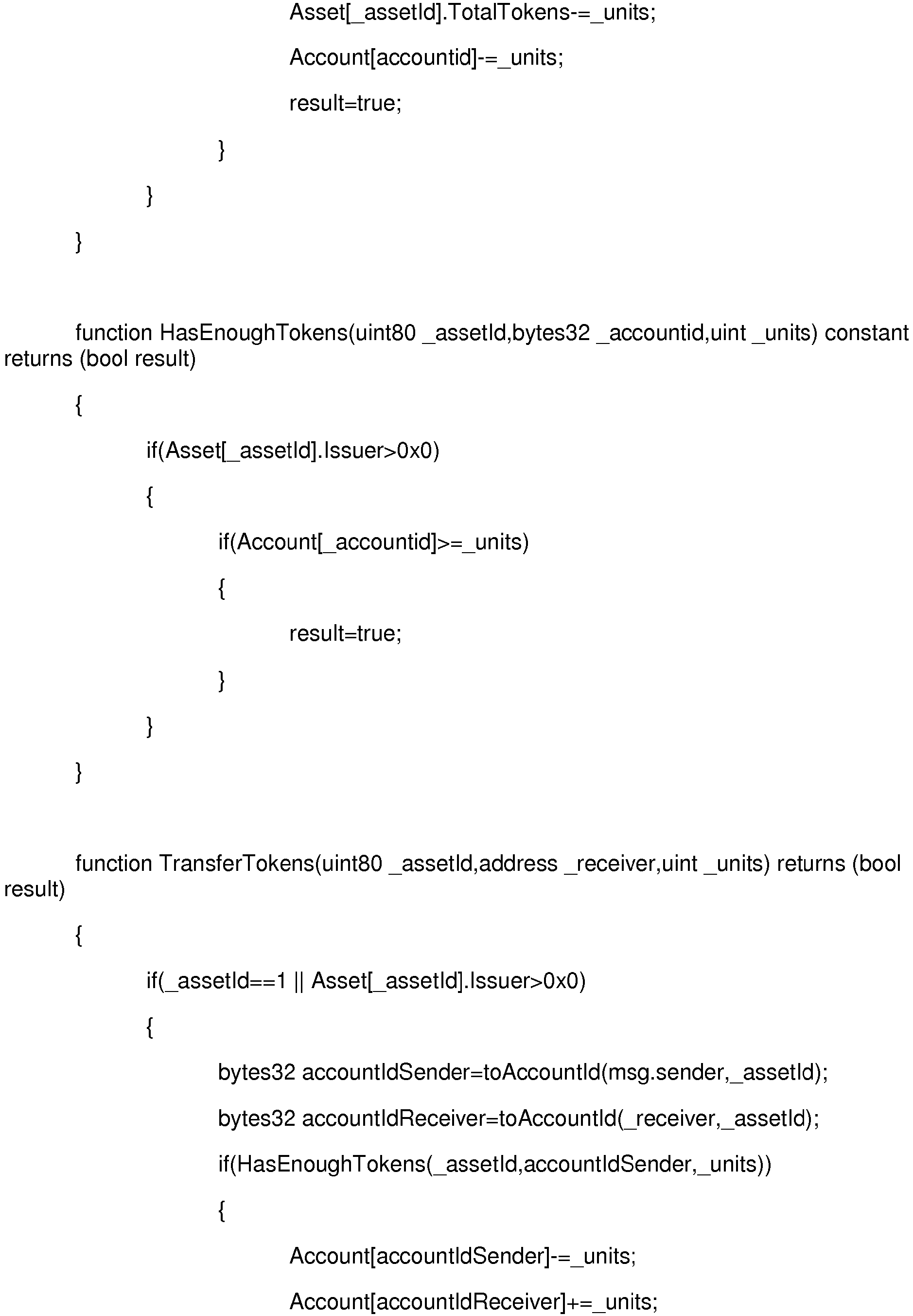

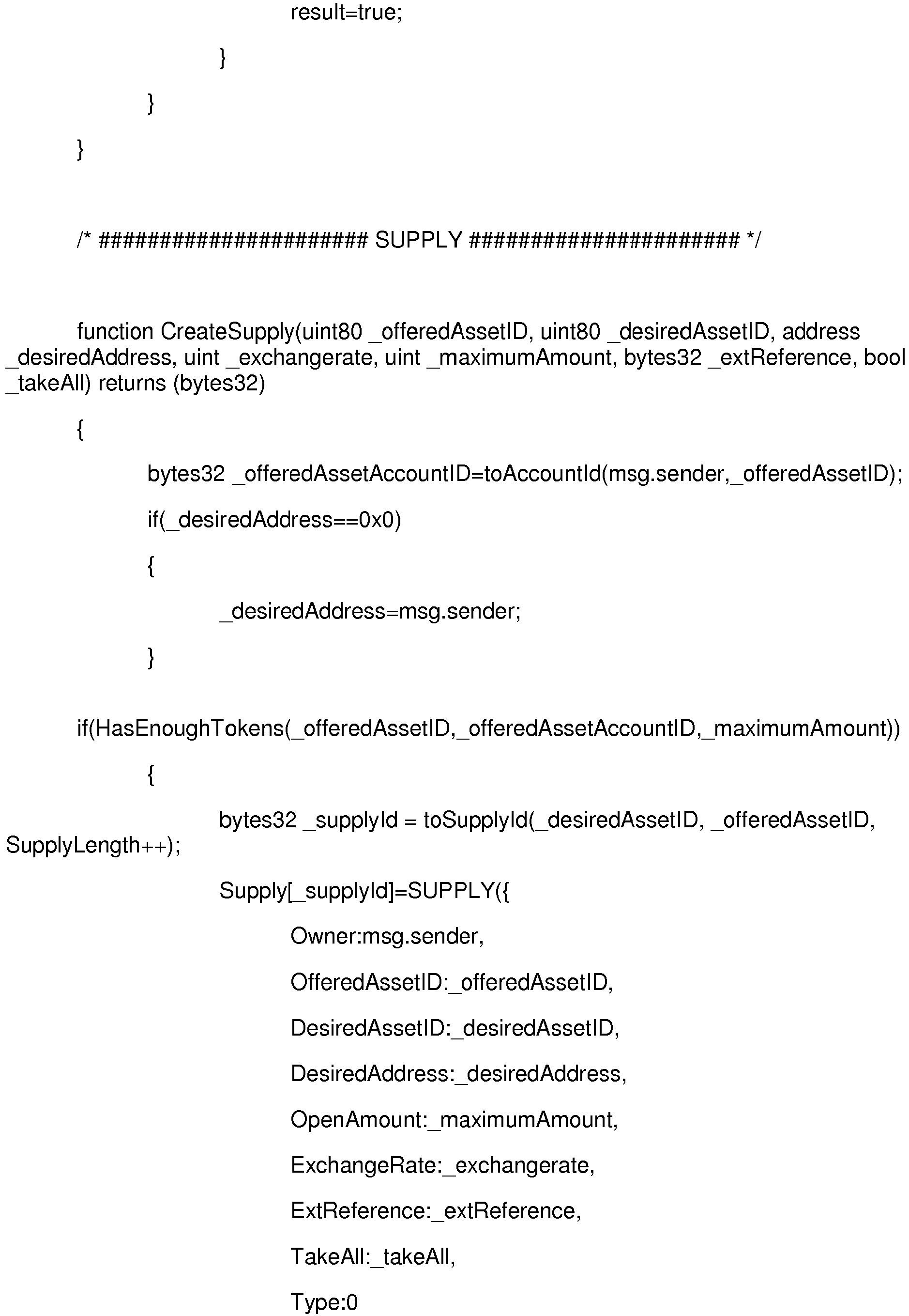

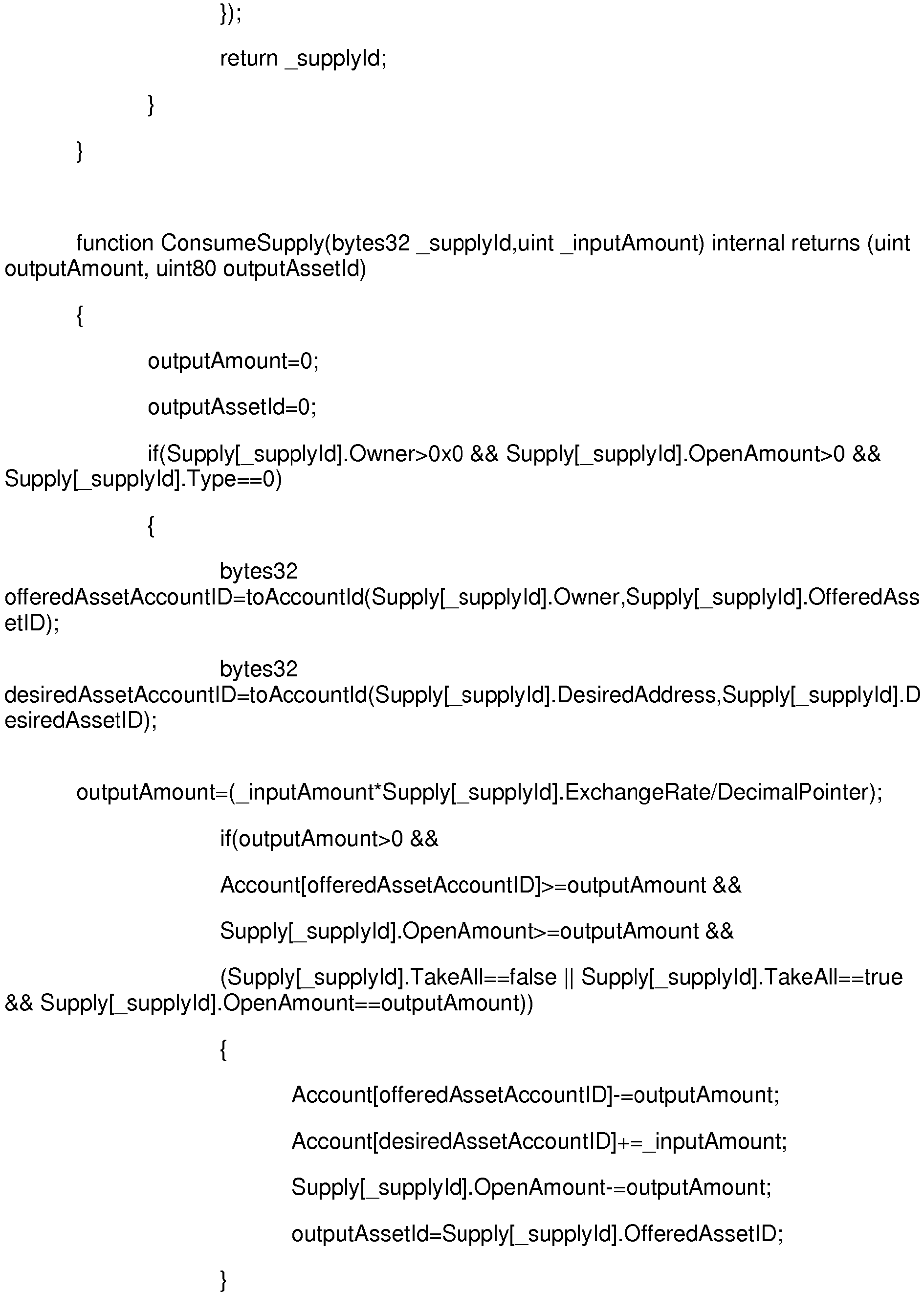

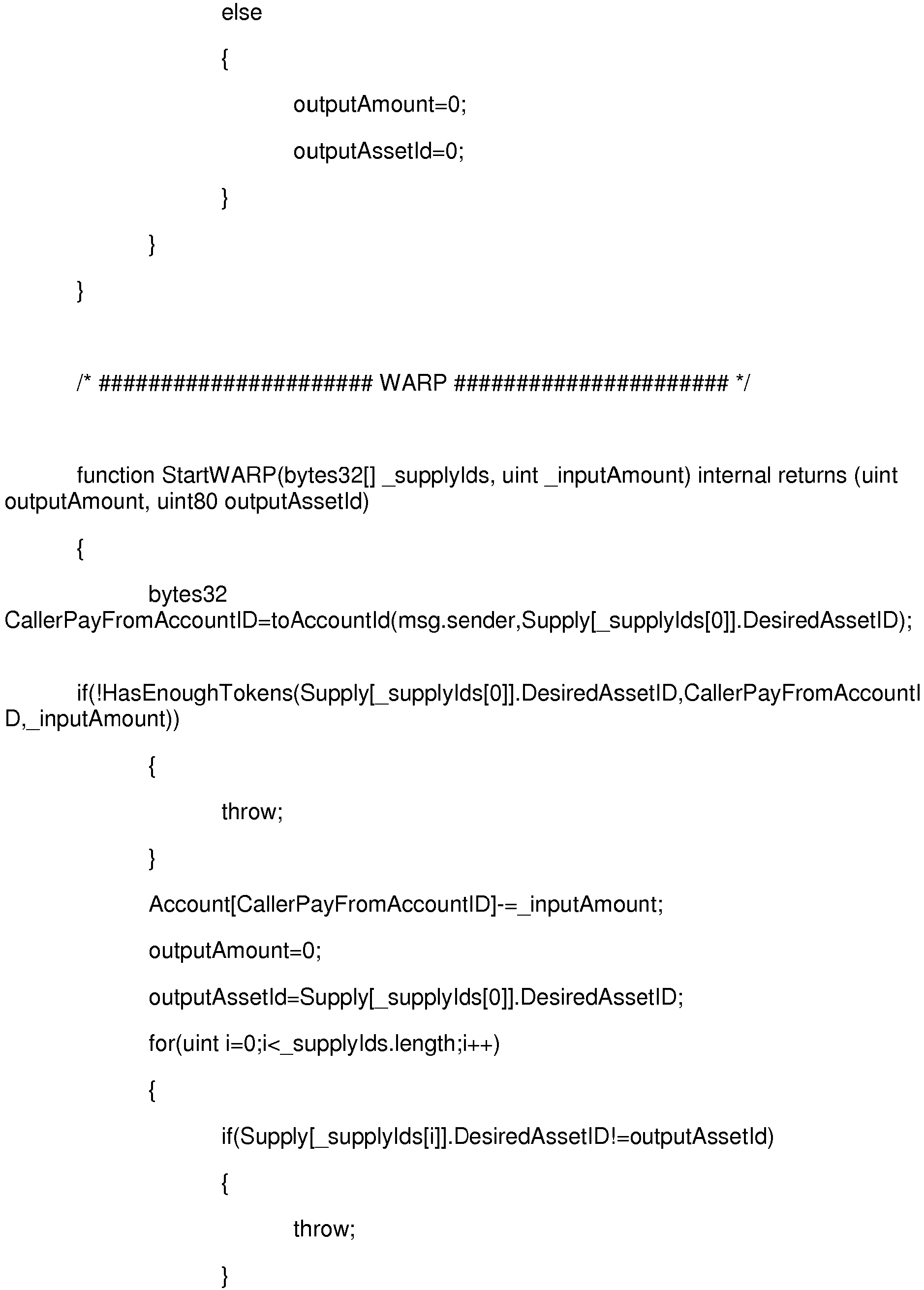

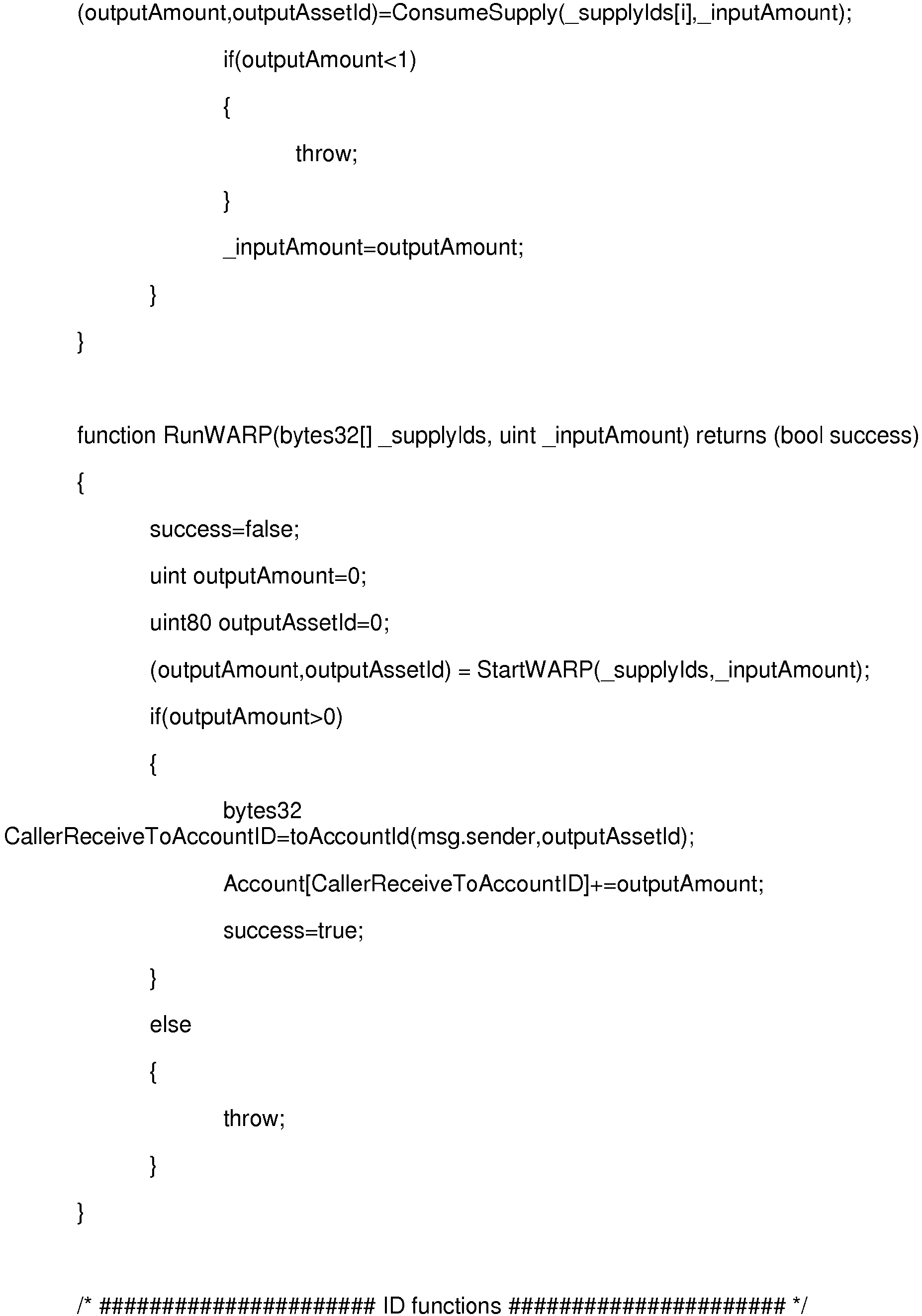

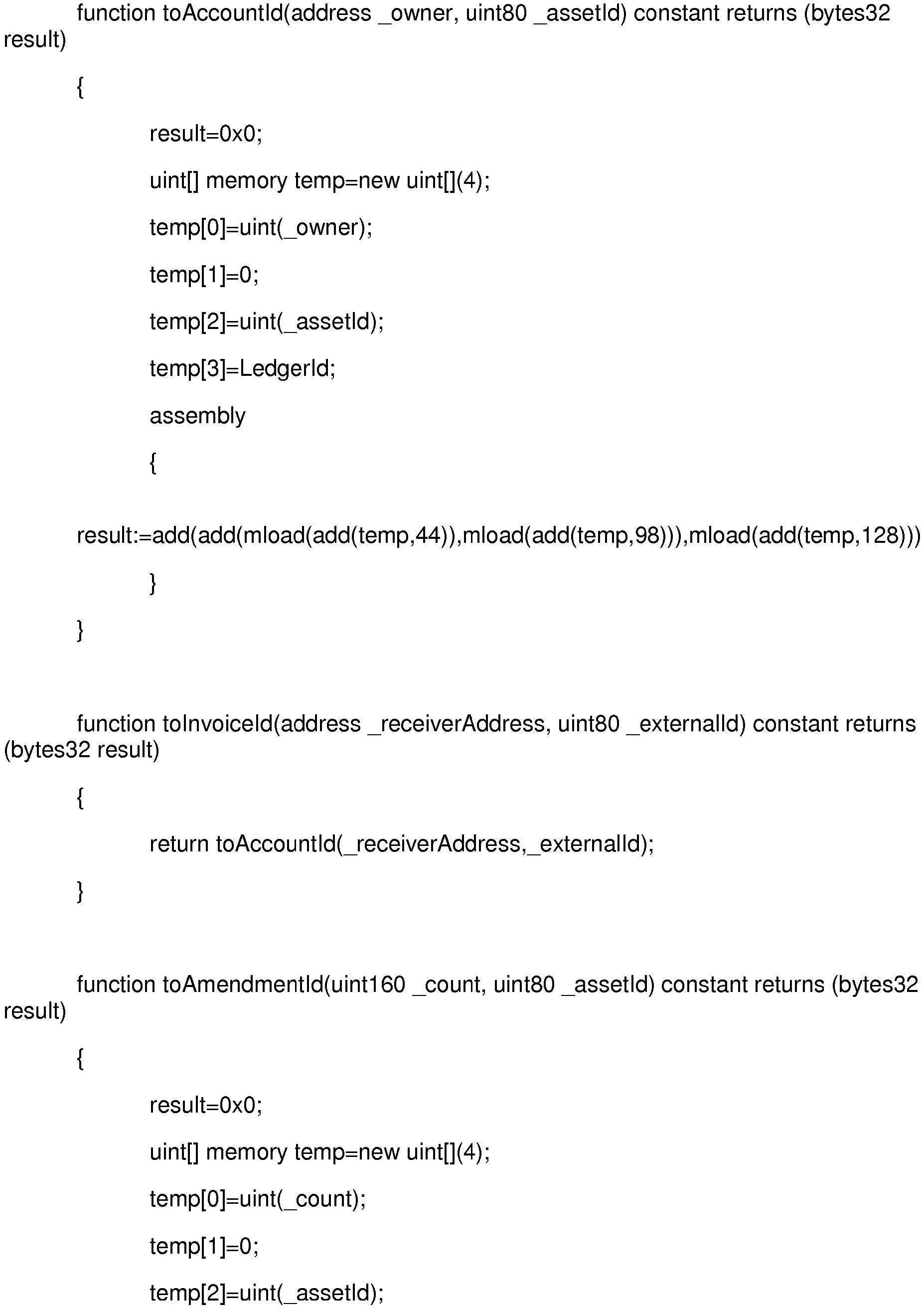

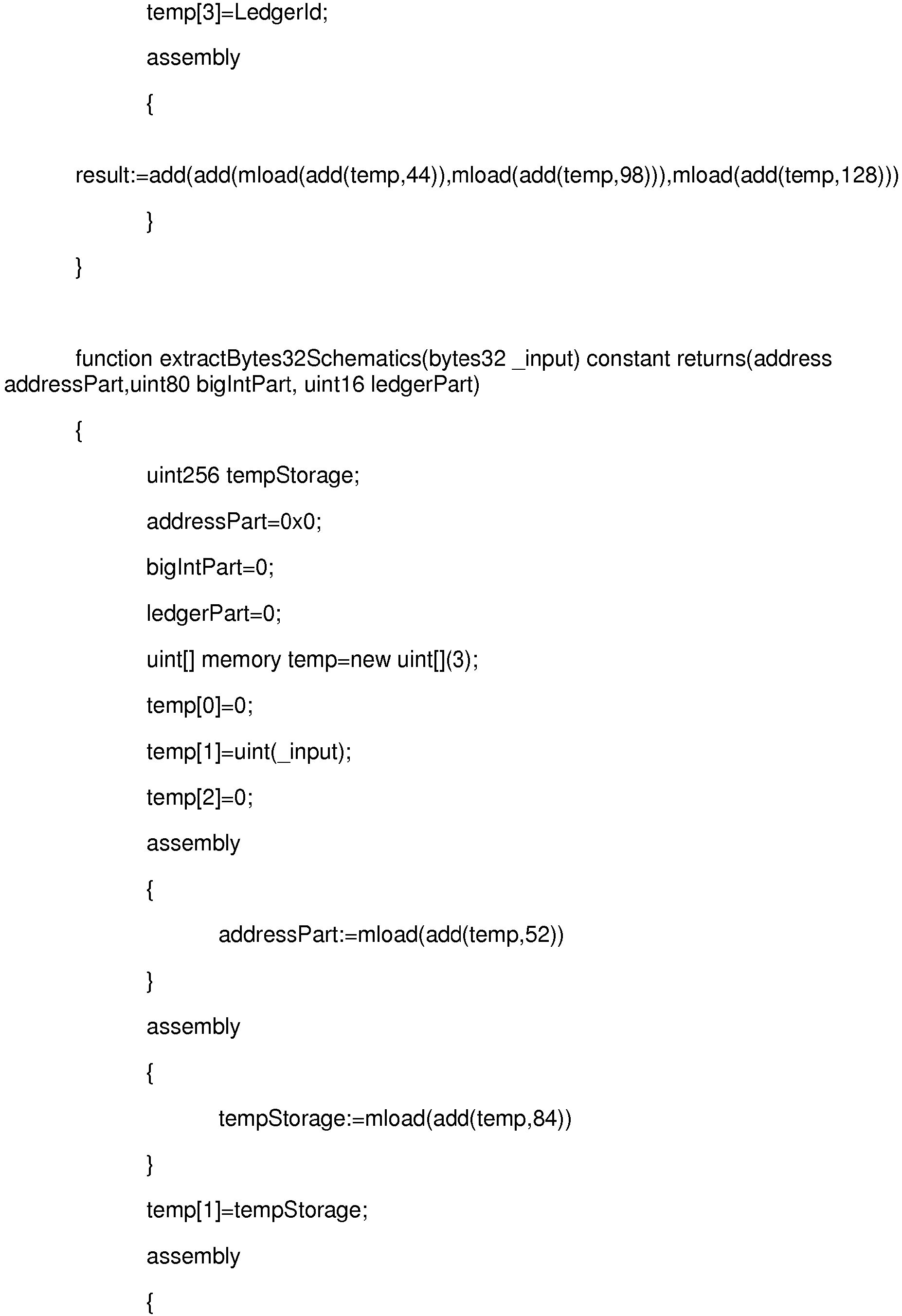

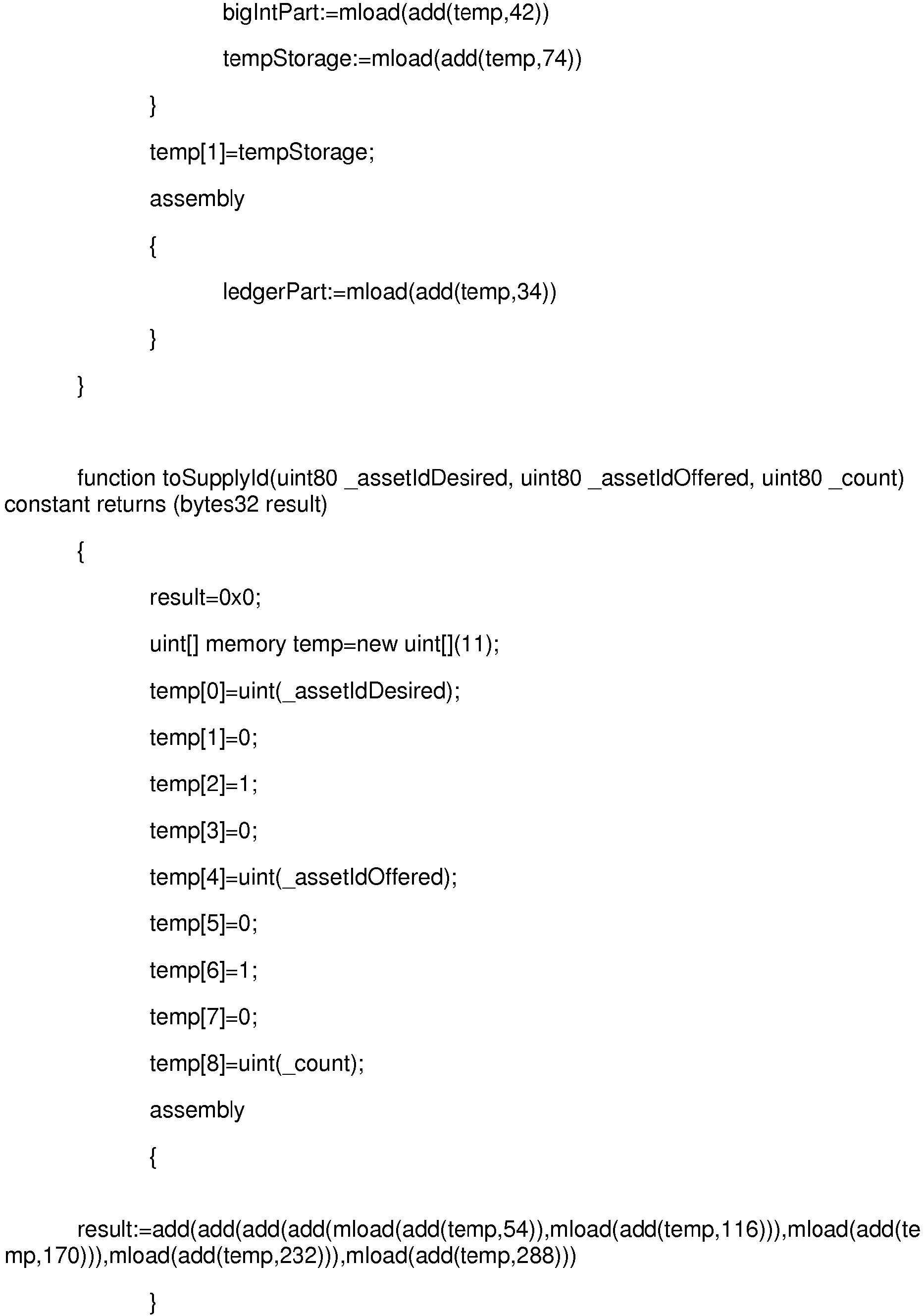

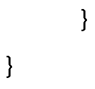

### List of reference numerals

1110-1140: transaction node
1111-1141: transaction supply
1132: committed multinode transaction
2000: network
2210-2220: ledger computing node
3000: network
3300: multinode transaction identifier
3301: multinode transaction
4000: method for carrying out electronic commerce
S4100: transaction supply issuing step
S4200: requesting multinode transaction
S4300: supplies identifying step
S4400: supplies combining step
S4500: multinode transaction transmitting step
S4600: multinode transaction committing step
S5300: supplies identifying and combining step
S5310: selecting transaction supply A
S5320: selecting N^{th} transaction supply B
S5330: one-side matching
S5331: N index updating
S5340: other-side matching
S5350: combining matching transactions
S5360: selecting M^{th} transaction supply C
S5370: one-side matching
S5371: M index updating
S5380: other-side matching
S5390: combining matching transactions
6300: multinode transaction identifier
6310: identifying unit
6330: combining unit
6320: communication unit

## Claims

1. A method (4000) for carrying out transactions (1111-1141) in a network (3000) implementing a distributed ledger,
wherein the network (3000) comprises a plurality of transaction nodes (1110-1140) a plurality of ledger computing nodes (2210-2220) and one multinode transaction identifier (3300, 6300),
the method comprising the steps of:
issuing (S4100) of transaction supplies (1111-1141), by the transaction nodes (1110-1140), identifying (S4300) and combining (S4400) at least three transaction supplies (1111-1141) into a multinode transaction (3301), by the multinode transaction identifier (3300, 6300), and providing the multinode transaction to a transaction node of the plurality of transaction nodes for recording the multinode transaction in the distributed ledger,
wherein the identifying step (S4300) comprises the steps of:
selecting (S5310) a first transaction supply (X),
recursively selecting and matching (S5320-S5340, S5360-S5380) two or more further transaction supplies (Y, Y'), wherein the first and the two or more further transaction supplies comprise buying and selling assets, so that
- a selling asset of the first transaction supply (X) matches a buying asset of a first further transaction supply (Y),
- if a buying asset of the first transaction supply (X) does not match a selling asset of the first further transaction supply (Y), finding a selling asset of each further transaction supply (Y) that matches a buying asset of a next further transaction supply (Y'), and
- if a selling asset of each further transaction supply (Y) that matches a buying asset of a next further transaction supply (Y') is found, finding a selling asset of the next further transaction supply (Y') that matches a buying asset of the first transaction supply (X),
and wherein the combining step (S4400) comprises
combining (S5350, S5390) the first transaction supply (X) and the two or more recursively matching transaction supplies (Y, Y'), if a selling asset of the next further transaction supply (Y') that matches a buying asset of the first transaction supply (X) is found.

2. The method according to claim 1 further comprising, before the identifying step (S4300) a step of:
requesting (S4200) the multinode transaction, by at least one transaction node (1110-1140).

3. The method according to claim 2, further comprising a step of transmitting (S4500) the multinode transaction (3301) to the transaction node (1110-1140) requesting (S4200) the multinode transaction.

4. The method according to any previous claim wherein the combining step (S5350, S5390) comprises the step of:
settling the at least three transaction supplies.

5. The method according to any previous claim further comprising the step of:
committing (S4600) of a committed multinode transaction (1132) in the distributed ledger, by a transaction node (1110-1140) which received the multinode transaction (3301).

6. The method according to claim 5 wherein the committed multinode transaction (1132) is recorded in the distributed ledger as a single transaction.

7. The method according to claim 5 or 6 wherein the multinode transaction (3301) is recorded in the distributed ledger by using a buffer when transferring assets among the transaction nodes (1110-1140).

8. A multinode transaction identifier (3300, 6300) for combining transactions (1111-1141) from a network (3000) implementing a distributed ledger,
wherein the network (3000) comprises a plurality of transaction nodes (1110-1140) capable of issuing (S4100) transaction supplies (1111-1141) and a plurality of ledger computing nodes (2210-2220),
the multinode transaction identifier (3300, 6300) comprising:
an identifying and combining unit (6310) for identifying (S4300) and combining (S4400) at least three transaction supplies (1111-1141) into a multinode transaction (3301), wherein the identifying (S4300) comprises selecting (S5310) a first transaction supply (X), and recursively selecting and matching (S5320-S5340, S5360-S5380) two or more further transaction supplies (Y, Y'), wherein the first and the two or more further transaction supplies comprise buying and selling assets, so that a selling asset of the first transaction supply (X) matches a buying asset of a first further transaction supply (Y), if a buying asset of the first transaction supply (X) does not match a selling asset of the first further transaction supply (Y), finding a selling asset of each further transaction supply (Y) that matches a buying asset of a next further transaction supply (Y'), and if a selling asset of each further transaction supply (Y) that matches a buying asset of a next further transaction supply (Y') is found, finding selling asset of the next further transaction supply (Y') that matches a buying asset of the first transaction supply (X), and wherein the combining (S4400) comprises combining (S5350, S5390) the first transaction supply (X) and the one or more recursively matching transaction supplies (Y, Y'), if a selling asset of the next further transaction supply (Y') that matches a buying asset of the first transaction supply (X) is found, and
a communication unit (6320) for transmitting (S4500) the multinode transaction (3301) to a transaction node of the plurality of transaction nodes for recording the multinode transaction in the distributed ledger.

## Patentansprüche

1. Verfahren (4000) zur Durchführung von Transaktionen (1111-1141) in einem Netzwerk (3000), das ein verteiltes Register implementiert,
wobei das Netzwerk (3000) eine Vielzahl von Transaktionsknoten (1110-1140), eine Vielzahl von Register-Rechenknoten (2210-2220) und einen Multiknoten-Transaktionsidentifizierer (3300, 6300) umfasst,
wobei das Verfahren die folgenden Schritte umfasst:
Ausstellen (S4100) von Transaktionslieferungen (1111-1141) durch die Transaktionsknoten (1110-1140), Identifizieren (S4300) und Kombinieren (S4400) von mindestens drei Transaktionslieferungen (1111-1141) zu einer Multiknoten-Transaktion (3301) durch den Multiknoten-Transaktionsidentifizierer (3300, 6300),
und Bereitstellen der Multiknoten-Transaktion an einen Transaktionsknoten der Vielzahl von Transaktionsknoten zum Aufzeichnen der Multiknoten-Transaktion in dem verteilten Register, wobei der Identifizierungsschritt (S4300) die folgenden Schritte umfasst:
Auswählen (S5310) einer ersten Transaktionslieferung (X),
rekursives Auswählen und Abgleichen (S5320-S5340, S5360-S5380) von zwei oder mehreren weiteren Transaktionslieferungen (Y, Y'), wobei die erste und die zwei oder die mehreren weiteren Transaktionslieferungen Kaufs- und Verkaufsassets umfassen, so dass
- ein Verkaufsasset der ersten Transaktionslieferung (X) mit einem Kaufsasset einer ersten weiteren Transaktionslieferung (Y) übereinstimmt,
- wenn ein Kaufsasset der ersten Transaktionslieferung (X) mit einem Verkaufsasset der ersten weiteren Transaktionslieferung (Y) nicht übereinstimmt, Auffinden eines Verkaufsassets jeder weiteren Transaktionslieferung (Y), der mit einem Kaufsasset einer nächsten weiteren Transaktionslieferung (Y') übereinstimmt, und
- wenn ein Verkaufsasset jeder weiteren Transaktionslieferung (Y) gefunden wird, das mit einem Kaufsasset einer nächsten weiteren Transaktionslieferung (Y') übereinstimmt, Auffinden eines Verkaufsassets der nächsten weiteren Transaktionslieferung (Y'), das mit einem Kaufsasset der ersten Transaktionslieferung (X) übereinstimmt,
und wobei der Kombinierungsschritt (S4400) Folgendes umfasst
Kombinieren (S5350, S5390) der ersten Transaktionslieferung (X) und der zwei oder mehreren rekursiv übereinstimmenden Transaktionslieferungen (Y, Y'), wenn ein Verkaufsasset der nächsten weiteren Transaktionslieferung (Y') gefunden wird, das mit einem Kaufsasset der ersten Transaktionslieferung (X) übereinstimmt.

2. Verfahren nach Anspruch 1, ferner umfassend vor dem Identifizierungsschritt (S4300) einen Schritt zum:
Anfordern (S4200) der Multiknoten-Transaktion durch mindestens einen Transaktionsknoten (1110-1140).

3. Verfahren nach Anspruch 2, das ferner einen Schritt zum Übertragen (S4500) der Multiknoten-Transaktion (3301) an den Transaktionsknoten (1110-1140) umfasst, der die Multiknoten-Transaktion anfordert (S4200).

4. Verfahren nach einem der vorhergehenden Ansprüche, wobei der Kombinierungsschritt (S5350, S5390) den folgenden Schritt umfasst:
Abwickeln der mindestens drei Transaktionslieferungen.

5. Verfahren nach einem der vorhergehenden Ansprüche, ferner umfassend den Schritt: Festschreiben (S4600) einer festgeschriebenen Multiknoten-Transaktion (1132) im verteilten Register durch einen Transaktionsknoten (1110-1140), der die Multiknoten-Transaktion (3301) empfangen hat.

6. Verfahren nach Anspruch 5, wobei die festgeschriebene Multiknoten-Transaktion (1132) im verteilten Register als eine einzige Transaktion aufgezeichnet wird.

7. Verfahren nach Anspruch 5 oder 6, wobei die Multiknoten-Transaktion (3301) im verteilten Register aufgezeichnet wird, indem ein Puffer verwendet wird, wenn Assets unter den Transaktionsknoten (1110-1140) übertragen werden.

8. Multiknoten-Transaktionsidentifizierer (3300, 6300) zum Kombinieren von Transaktionen (1111-1141) aus einem Netzwerk (3000), das ein verteiltes Register implementiert,
wobei das Netzwerk (3000) eine Vielzahl von Transaktionsknoten (1110-1140), die in der Lage sind, Transaktionslieferungen (1111-1141) auszustellen (S4100), und eine Vielzahl von Register-Rechenknoten (2210-2220) umfasst,
wobei der Multiknoten-Transaktionsidentifizierer (3300, 6300) umfasst:
eine Identifizierungs- und Kombinationseinheit (6310) zum Identifizieren (S4300) und Kombinieren (S4400) von mindestens drei Transaktionslieferungen (1111-1141) zu einer Multiknoten-Transaktion (3301), wobei das Identifizieren (S4300) das Auswählen (S5310) einer ersten Transaktionslieferung (X) und das rekursive Auswählen und Abgleichen (S5320-S5340, S5360-S5380) von zwei oder mehreren weiteren Transaktionslieferungen (Y, Y') umfasst, wobei der erste und die zwei oder die mehreren weiteren Transaktionslieferungen Kaufs- und Verkaufsassets umfassen, so dass ein Verkaufsasset der ersten Transaktionslieferung (X) mit einem Kaufsassets einer ersten weiteren Transaktionslieferung (Y) übereinstimmt, wenn ein Kaufsasset der ersten Transaktionslieferung (X) mit einem Verkaufsasset der ersten weiteren Transaktionslieferung (Y) nicht übereinstimmt, Auffinden eines Verkaufsassets jeder weiteren Transaktionslieferung (Y), das mit einem Kaufsasset einer nächsten weiteren Transaktionslieferung (Y') übereinstimmt, und wenn ein Verkaufsasset jeder weiteren Transaktionslieferung (Y) gefunden wird, das mit einem Kaufsasset einer nächsten weiteren Transaktionslieferung (Y') übereinstimmt, Auffinden eines Verkaufsassets der nächsten weiteren Transaktionslieferung (Y'), das mit einem Kaufsasset der ersten Transaktionslieferung (X) übereinstimmt, und wobei das Kombinieren (S4400) das Kombinieren (S5350, S5390) der ersten Transaktionslieferung (X) und des einen oder der mehreren rekursiv übereinstimmenden Transaktionslieferungen (Y,) umfasst, wenn ein Verkaufsasset der nächsten weiteren Transaktionslieferung (Y') gefunden wird, das mit einem Kaufsasset der ersten Transaktionslieferung (X) übereinstimmt, und
eine Kommunikationseinheit (6320) zum Übertragen (S4500) der Multiknoten-Transaktion (3301) an einen Transaktionsknoten der Vielzahl von Transaktionsknoten zum Aufzeichnen der Multiknoten-Transaktion im verteilten Register.

## Revendications

1. Méthode (4000) pour effectuer des transactions (1111-1141) dans un réseau (3000) mettant en œuvre un grand livre distribué,
le réseau (3000) comprend une pluralité de nœuds de transaction (1110-1140), une pluralité de nœuds de calcul du grand livre (2210-2220) et un identificateur de transaction multinœud (3300, 6300),
la méthode comprenant les étapes de :
l'émission (S4100) de fournitures de transaction (1111-1141) par les nœuds de transaction (1110-1140), l'identification (S4300) et la combinaison (S4400) d'au moins trois fournitures de transaction (1111-1141) en une transaction multinœud (3301), par l'identificateur de transaction multinœud (3300, 6300), et la fourniture de la transaction multinœud à un nœud de transaction de la pluralité de nœuds de transaction pour l'enregistrement de la transaction multinœud dans le grand livre distribué,
dans laquelle l'étape d'identification (S4300) comprend les étapes suivantes :
sélection (S5310) d'une première offre de transaction (X),
sélection récursive et mise en correspondance (S5320-S5340, S5360-S5380) de deux ou plusieurs autres offres de transaction (Y, Y'), dans lesquelles la première et les deux ou plusieurs autres offres de transaction comprennent l'achat et la vente d'actifs, de manière à ce que
- un actif de vente de la première offre de transaction (X) correspond à un actif d'achat d'une première offre de transaction supplémentaire (Y),
- si un actif d'achat de la première offre de transaction (X) ne correspond pas à un actif de vente de la première offre de transaction supplémentaire (Y), trouver un actif de vente de chaque offre de transaction supplémentaire (Y) qui correspond à un actif d'achat de l'offre de transaction supplémentaire suivante (Y'), et
- si un actif de vente de chaque offre de transaction supplémentaire (Y) correspondant à un actif d'achat de l'offre de transaction supplémentaire suivante (Y') est trouvé, trouver un actif de vente de l'offre de transaction supplémentaire suivante (Y') correspondant à un actif d'achat de la première offre de transaction (X),
et dans laquelle l'étape de combinaison (S4400) comprend
combiner (S5350, S5390) la première offre de transaction (X) et les deux ou plusieurs offres de transaction correspondant récursivement (Y, Y'), si un actif de vente de l'offre de transaction suivante (Y') correspondant à un actif d'achat de la première offre de transaction (X) est trouvé.

2. Méthode selon la revendication 1 comprend en outre, avant l'étape d'identification (S4300), une étape consistant à
demander (S4200) de la transaction multinœud, par au moins un nœud de transaction (1110-1140).

3. Méthode selon la revendication 2, comprenant en outre une étape de transmission (S4500) de la transaction multinode (3301) au nœud de transaction (1110-1140) demandant (S4200) la transaction multinode.

4. Méthode selon l'une quelconque des revendications précédentes, dans laquelle l'étape de combinaison (S5350, S5390) comprend l'étape suivante :
régler au moins trois fournitures de transaction.

5. Méthode selon toute revendication précédente comprend en outre l'étape suivante :
engager (S4600) une transaction multinœud engagée (1132) dans le grand livre distribué, par un nœud de transaction (1110-1140) qui a reçu la transaction multinœud (3301).

6. Méthode selon la revendication 5, dans laquelle la transaction multinœud engagée (1132) est enregistrée dans le grand livre distribué comme une transaction unique.

7. Méthode selon la revendication 5 ou 6, dans laquelle la transaction multinœud (3301) est enregistrée dans le grand livre distribué en utilisant un tampon lors du transfert d'actifs entre les nœuds de transaction (1110-1140).

8. Identificateur de transaction multinœud (3300, 6300) pour combiner les transactions (1111-1141) d'un réseau (3000) mettant en œuvre un grand livre distribué,
le réseau (3000) comprend une pluralité de nœuds de transaction (1110-1140) capables d'émettre (S4100) des fournitures de transaction (1111-1141) et une pluralité de nœuds de calcul du grand livre (2210-2220),
l'identificateur de transaction multinode (3300, 6300) comprenant :
une unité d'identification et de combinaison (6310) pour identifier (S4300) et combiner (S4400) au moins trois fournitures de transaction (1111-1141) dans une transaction multinœud (3301), dans laquelle l'identification (S4300) comprend la sélection (S5310) d'une première fourniture de transaction (X), et la sélection récursive et l'appariement (S5320-S5340, S5360-S5380) de deux fournitures de transaction supplémentaires ou plus (Y, Y').), où la première et les deux ou plusieurs autres fournitures de transaction comprennent des actifs d'achat et de vente, de sorte qu'un actif de vente de la première fourniture de transaction (X) corresponde à un actif d'achat d'une première autre fourniture de transaction (Y), si un actif d'achat de la première fourniture de transaction (X) ne correspond pas à un actif de vente de la première autre fourniture de transaction (Y), trouver un actif de vente de chaque autre fourniture de transaction (Y) qui correspond à un actif d'achat d'une prochaine autre fourniture de transaction (Y').), et si un actif de vente de chaque autre offre de transaction (Y) qui correspond à un actif d'achat de l'offre de transaction suivante (Y') est trouvé, recherche d'un actif de vente de l'offre de transaction suivante (Y') qui correspond à un actif d'achat de la première offre de transaction (X), et dans lequel la combinaison (S4400) comprend la combinaison (S5350, S5390) de la première offre de transaction (X) et d'une ou plusieurs offres de transaction correspondant récursivement (Y, Y'), si un actif de vente de l'offre de transaction supplémentaire suivante (Y') qui correspond à un actif d'achat de la première offre de transaction (X) est trouvé, et
une unité de communication (6320) pour transmettre (S4500) la transaction multinœud (3301) à un nœud de transaction de la pluralité de nœuds de transaction pour enregistrer la transaction multinœud dans le grand livre distribué.
